(19) Europäisches Patentamt
European Patent Office
Office européen des brevets

(11) EP 2 891 684 A1

(12) # EUROPEAN PATENT APPLICATION
published in accordance with Art. 153(4) EPC

(43) Date of publication:
**08.07.2015 Bulletin 2015/28**

(21) Application number: **13833471.9**

(22) Date of filing: **26.08.2013**

(51) Int Cl.:
***C08L 77/00*** *(2006.01)*
***C08G 69/36*** *(2006.01)*
***C08J 3/22*** *(2006.01)*
***C08K 3/00*** *(2006.01)*
***C08K 5/098*** *(2006.01)*

(86) International application number:
**PCT/JP2013/072786**

(87) International publication number:
**WO 2014/034624 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2012 JP 2012191699**
**27.12.2012 JP 2012285688**

(71) Applicant: **Mitsubishi Gas Chemical Company, Inc.**
**Tokyo 100-8324 (JP)**

(72) Inventors:
- **ODA, Takafumi**
**Hiratsuka-shi**
**Kanagawa 254-0016 (JP)**
- **TSUNAKA, Nobuhide**
**Hiratsuka-shi**
**Kanagawa 254-0016 (JP)**
- **MIYABE, Takanori**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(54) **POLYAMIDE RESIN COMPOSITION AND METHOD FOR PRODUCING SAME**

(57) A polyamide resin composition containing a polyamide resin (A); and a metal compound (C) containing at least one metal atom selected from iron, manganese, copper, and zinc; or a colorant (D) containing at least one metal atom selected from iron, manganese, copper, and zinc; wherein the polyamide resin (A) contains 25 to 50% by mol of a diamine unit containing a specific diamine unit in an amount of 50% by mol or more, 25 to 50% by mol of a dicarboxylic acid unit containing a specific dicarboxylic acid unit in an amount of 50% by mol or more, and 0.1 to 50% by mol of a specific constitutional unit.

EP 2 891 684 A1

## Description

TECHNICAL FIELD

The present invention relates to a polyamide resin composition and a method for producing the same, and specifically, a polyamide resin composition expressing oxygen absorption performance, and a method for producing the same.

BACKGROUND ART

A polyamide obtained by a polycondensation reaction of xylylenediamine and an aliphatic dicarboxylic acid, for example, a polyamide obtained with m-xylylenediamine and adipic acid (which is hereinafter referred to as nylon MXD6), exhibits a high strength, a high elastic modulus, and a low transmission rate to a gaseous substance such as oxygen, carbon dioxide, odors, and flavors, and is thus widely used as a gas barrier material in the field of packaging materials. Nylon MXD6 has good heat stability on melting, as compared to other gas barrier resins, and can thus be co-extruded or co-injection molded with a thermoplastic resin, such as polyethylene terephthalate (which is hereinafter abbreviated as PET), nylon 6, and polypropylene. Accordingly, nylon MXD6 is utilized as a gas barrier layer constituting a multilayer structure.

In recent years, there has been practically used a method in which a small amount of a transition metal compound is added to and mixed with nylon MXD6 to impart an oxygen absorption performance to nylon MXD6, which is utilized as an oxygen barrier material constituting a container or a packaging material, whereby oxygen penetrating from the outside of the container is absorbed by nylon MXD6, and simultaneously oxygen remaining inside the container is also absorbed by nylon MXD6, thereby further enhancing the storage stability of the content of the container as compared to a container utilizing an ordinary oxygen barrier thermoplastic resin (see, for example, Patent Documents 1 and 2).

On the other hand, in order to remove oxygen in a container, an oxygen absorbent has been used from the past. For example, Patent Documents 3 and 4 describe an oxygen absorbing multilayer structure and an oxygen absorbing film with an oxygen absorbent such as iron powder dispersed in resin. Patent Document 5 describes a product having an oxygen removing layer that contains an ethylenically unsaturated compound such as polybutadiene and a transition metal catalyst such as cobalt, and an oxygen barrier layer such as a polyamide.

However, the oxygen absorbing multilayer and the oxygen absorbing film with an oxygen absorbent such as iron powder dispersed in resin are non-transparent since the resin is colored by an oxygen absorbent such as iron powder, and therefore, it is limited in terms of applications in that it cannot be used in a packaging field that requires transparency. Further, by the use of iron powder, there is a limit in terms of the applications in that a metal detector used in the examination of package containers cannot be used. In addition, with a resin formed by blending an ethylenically unsaturated compound such as polybutadiene and a transition metal catalyst such as cobalt, there are problems in that an ethylenically unsaturated compound such as polybutadiene is oxidized and decomposed by an oxygen absorption reaction, and thus, offensive odor by low molecular compounds may occur or the color or strength of molded articles may be damaged.

Regarding these problems, the present inventors have succeeded in the development of a polyamide resin which express oxygen absorption performance sufficiently even when not containing a metal, and has extremely good transparency while not generating offensive odor (Patent Document 6). In addition, the present inventors have also succeeded in the development of a polyamide resin composition having further increased oxygen absorption performance while not deteriorating the transparency of the polyamide resin (Patent Document 7).

CITATION LIST

PATENT LITERATURE

[Patent Document 1] JP-A-2003-341747
[Patent Document 2] Japanese Patent No. 2,991,437
[Patent Document 3] JP-A-2-72851
[Patent Document 4] JP-A-4-90848
[Patent Document 5] JP-A-5-115776
[Patent Document 6] WO 2011/081099
[Patent Document 7] WO 2012/090797

## SUMMARY OF INVENTION

## TECHNICAL PROBLEM

A first problem to be solved by the present invention is to provide a polyamide resin composition which is capable of expressing excellent oxygen absorption performance and is hardly scorched during the production and molding. A second problem is to provide a polyamide resin composition which is capable of expressing superior oxygen absorption performance at low cost and meets the coloration required for a molded article.

## SOLUTION TO PROBLEM

The present invention provides a polyamide resin composition and a method for producing the same, and a molded article containing the polyamide resin composition, as described below.

<1> A polyamide resin composition comprising a polyamide resin (A) and a metal compound (C) containing at least one metal atom selected from iron, manganese, copper, and zinc,
wherein the polyamide resin (A) comprises:

from 25 to 50% by mol of a diamine unit, which contains at least one diamine unit selected from the group consisting of an aromatic diamine unit represented by the following general formula (I-1), an alicyclic diamine unit represented by the following general formula (I-2), and a linear aliphatic diamine unit represented by the following general formula (I-3), in an amount in total of 50% by mol or more,
from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more, and
from 0.1 to 50% by mol of a constitutional unit represented by the following general formula (III):

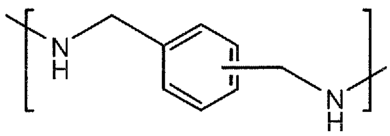
(I-1)

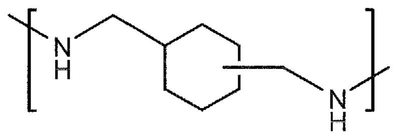
(I-2)

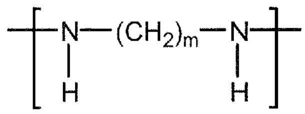
(I-3)

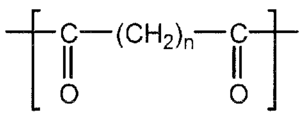
(II-1)

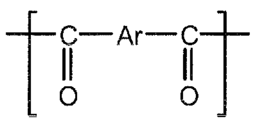
(II-2)

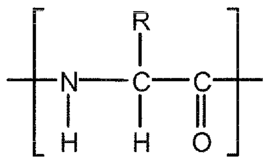
(III)

wherein,

in the general formula (1-3), m represents an integer of from 2 to 18;
in the general formula (II-1), n represents an integer of from 2 to 18;
in the general formula (II-2), Ar represents an arylene group; and
in the general formula (III), R represents a substituted or unsubstituted alkyl group or a substituted or unsubstituted aryl group.

<2> The polyamide resin composition according to the above <1>, which further contains a polyamide resin (B) different from the polyamide resin (A).
<3> A method for producing the polyamide resin composition according to the above <2>, including a step of:

melt-mixing the polyamide resin (B) and the metal compound (C) to obtain a master batch, and
melt-kneading the master batch with the polyamide resin (A).

<4> A molded article containing the polyamide resin composition according to the above <1> or <2>.

<5> A polyamide resin composition comprising a polyamide resin (A) and a colorant (D) containing at least one metal atom selected from iron, manganese, copper, and zinc,
wherein the polyamide resin (A) comprises:

from 25 to 50% by mol of a diamine unit, which contains at least one diamine unit selected from the group consisting of an aromatic diamine unit represented by the following general formula (I-1), an alicyclic diamine unit represented by the following general formula (1-2), and a linear aliphatic diamine unit represented by the following general formula (1-3), in an amount in total of 50% by mol or more,
from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more, and
from 0.1 to 50% by mol of a constitutional unit represented by the following general formula (III):

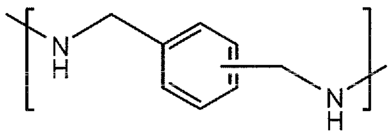
(I-1)

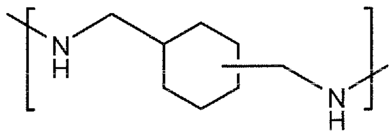
(I-2)

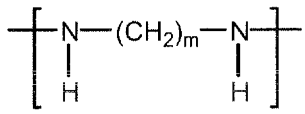
(I-3)

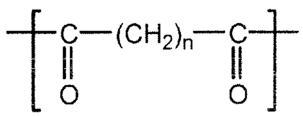
(II-1)

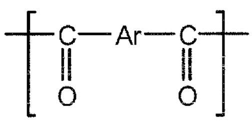
(II-2)

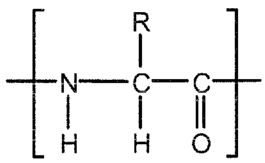
(III)

wherein,

in the general formula (1-3), m represents an integer of from 2 to 18;
in the general formula (II-1), n represents an integer of from 2 to 18;
in the general formula (II-2), Ar represents an arylene group; and
in the general formula (III), R represents a substituted or unsubstituted alkyl group or a substituted or unsubstituted aryl group.

<6> A method for producing the polyamide resin composition according to the above <5>, including a step of:

melt-mixing the colorant (D) and a thermoplastic resin (X) to obtain a master batch, and
melt-kneading the master batch with the polyamide resin (A).

<7> A molded article containing the polyamide resin composition according to the above <5>.

In the present specification, the present invention according to the above <1 > to <4> and the present invention according to the above <5> to <7> are taken as a "first invention" and a "second invention", respectively.

ADVANTAGEOUS EFFECTS OF INVENTION

The polyamide resin composition of the present invention can express excellent oxygen absorption performance while not lowering the oxygen barrier property due to the oxidation and deterioration of the resin during the production. In particular, the polyamide resin composition of the first invention is hardly scorched during the production and the molding, and has an excellent heat aging resistance. Further, the polyamide resin composition of the second invention can improve a designing property by coloration. In addition, a molded article obtained using the polyamide resin composition of the second invention, in particular, a container, has excellent oxygen absorption performance, and can inhibit the deterioration of the contents by shielding ultraviolet rays or the like by coloration.

DESCRIPTION OF EMBODIMENTS

As the first invention, the polyamide resin composition of the present invention includes a specific polyamide resin (A) as described later (which is hereinafter referred to as an "oxygen absorbing polyamide resin" in some cases), and a metal compound (C) containing a specific metal atom as described later. In addition, the polyamide resin composition preferably includes a polyamide resin (B) different from the polyamide resin (A).

The content of the polyamide resin (A) in the polyamide resin composition of the first invention is preferably from 60 to 100% by mass, more preferably from 80 to 100% by mass, and even more preferably from 90 to 100% by mass, with respect to 100% by mass of the polyamide resin composition. Further, the content of the polyamide resin (B) is preferably from 0 to 40% by mass, more preferably from 0 to 20% by mass, and even more preferably from 0 to 10% by mass, with respect to 100% by mass of the polyamide resin composition.

Furthermore, the content of the metal compound (C) is preferably from 10 to 5,000 ppm by mass, and more preferably from 50 to 1,000 ppm by mass, with respect to 100% by mass of the polyamide resin composition.

As the second invention, the polyamide resin composition of the present invention includes a specific polyamide resin (A) as described later (which is hereinafter referred to as an "oxygen absorbing polyamide resin" in some cases), and a colorant (D) containing a specific metal atom, as described later.

Furthermore, the content of the colorant (D) is, in terms of a metal atom concentration, preferably from 1 to 5,000 ppm by mass, more preferably from 1 to 2,000 ppm by mass, even more preferably from 3 to 1,000 ppm by mass, and particularly preferably 5 to 500 ppm by mass, with respect to 100% by mass of the polyamide resin composition.

The polyamide resin composition of the present invention may further include other components within a range not detracting from the effects of the present invention. In addition, in the present invention, in the case where the polyamide resin composition includes other components, a polyamide resin composition including other components is considered.

1. Polyamide Resin (A)

In the present invention, a polyamide resin (A) contains: from 25 to 50% by mol of a diamine unit, which contains at least one diamine unit selected from the group consisting of an aromatic diamine unit represented by the following general formula (I-1), an alicyclic diamine unit represented by the following general formula (I-2), and a linear aliphatic diamine unit represented by the following general formula (1-3), in an amount in total of 50% by mol or more; from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more; and from 0.1 to 50% by mol of a tertiary hydrogen-containing carboxylic acid unit (preferably a constitutional unit represented by the following general formula (III)):

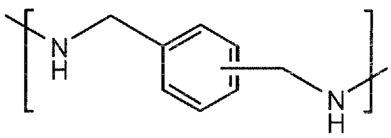
(I-1)

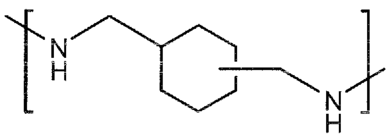
(I-2)

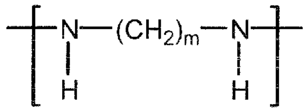
(I-3)

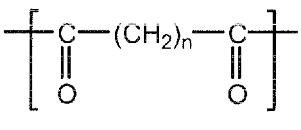
(II-1)

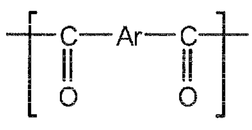
(II-2)

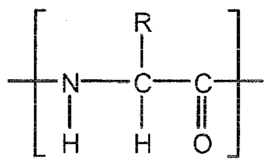
(III)

wherein, in the general formula (I-3), m represents an integer of from 2 to 18; in the general formula (II-1), n represents an integer of from 2 to 18; in the general formula (II-2), Ar represents an arylene group; and in the general formula (III), R represents a substituted or unsubstituted alkyl group or a substituted or unsubstituted aryl group.

However, the total of the diamine unit, the dicarboxylic acid unit, and the tertiary hydrogen-containing carboxylic acid unit should not exceed 100% by mol. The polyamide resin (A) may further contain any other constitutional unit than the above within a range not detracting from the effects of the present invention.

In the polyamide resin (A), the content of the tertiary hydrogen-containing carboxylic acid unit is from 0.1 to

50% by mol. When the content of the tertiary hydrogen-containing carboxylic acid unit is less than 0.1% by mol, sufficient oxygen absorption performance is not expressed. On the other hand, when the content of the tertiary hydrogen-containing carboxylic acid unit is more than 50% by mol, the content of tertiary hydrogen is too high, and therefore, the physical properties such as the gas barrier property and the mechanical properties of the polyamide resin (A) may worsen; and in particular, in the case where the tertiary hydrogen-containing carboxylic acid is an amino acid, then not only the heat resistance is poor since peptide bonds continue therein but also a cyclic product of a dimer of the amino acid is formed, which interferes with polymerization. From the viewpoint of the oxygen absorption performance or properties of the polyamide resin (A), the content of the tertiary hydrogen-containing carboxylic acid unit is preferably 0.2% by mol or more, and more preferably 1% by mol or more, and is preferably 40% by mol or less, and more preferably 30% by mol or less.

In the polyamide resin (A), the content of the diamine unit is from 25 to 50% by mol, and from the viewpoint of the oxygen absorption performance and the polymer properties, the content is preferably from 30 to 50% by mol. Similarly, in the polyamide resin (A), the content of the dicarboxylic acid unit is from 25 to 50% by mol, and preferably from 30 to 50% by mol.

Preferably, the ratio of the content of the diamine unit to the content of the dicarboxylic acid unit is nearly the same from the viewpoint of a polymerization reaction, and more preferably, the content of the dicarboxylic acid unit is $\pm 2\%$ by mol of the content of the diamine unit. When the content of the dicarboxylic acid unit is more than the range of $\pm 2\%$ by mol of the content of the diamine unit, then the degree of polymerization of the polyamide resin (A) is difficult to increase and therefore, much time is needed for increasing the degree of polymerization of the compound and the compound is thereby often thermally degraded.

1-1. Diamine Unit

The diamine unit in the polyamide resin (A) contains at least one diamine unit selected from the group consisting of an aromatic diamine unit represented by the general formula (I-1), an alicyclic diamine unit represented by the general formula (I-2), and a linear aliphatic diamine unit represented by the general formula (I-3) in an amount in total of 50% by mol or more in the diamine unit; and the content is preferably 70% by mol or more, more preferably 80% by mol or more, and even more preferably 90% by mol or more, and is preferably 100% by mol or less.

Examples of the compound that can constitute the aromatic diamine unit represented by the general formula (I-1) include o-xylylenediamine, m-xylylenediamine, and p-xylylenediamine. These may be used singly or in combination of two or more kinds thereof.

The compound that can constitute the alicyclic diamine unit represented by the general formula (1-2) includes bis(aminomethyl)cyclohexanes such as 1,3-bis(aminomethyl)cyclohexane and 1,4-bis(aminomethyl)cyclohexane. These may be used singly or in combination of two or more kinds thereof.

The bis(aminomethyl)cyclohexanes have structural isomers. Those having a higher cis-isomer ratio have high crystallinity and have good moldability. On the other hand, those having a lower cis-isomer ratio give transparent shapes having low crystallinity. Accordingly, in the case where the shapes are desired to have a high crystallinity, the cis-isomer content ratio in the bis(aminomethyl)cyclohexanes is preferably 70% by mol or more, more preferably 80% by mol or more, and even more preferably 90% by mol or more. On the other hand, when the shapes are desired to have a low crystallinity, then the cis-isomer content ratio in the bis(aminomethyl)cyclohexanes is preferably 50% by mol or less, more preferably 40% by mol or less, and even more preferably 30% by mol or less.

In the general formula (1-3), m represents an integer of from 2 to 18, preferably from 3 to 16, more preferably from 4 to 14, and even more preferably from 6 to 12.

Examples of the compound that can constitute the linear aliphatic diamine unit represented by the general formula (I-3) include aliphatic diamines such as ethylenediamine, 1,3-propylenediamine, tetramethylenediamine, pentamethylenediamine, hexamethylenediamine, heptamethylenediamine, octamethylenediamine, nonamethylenediamine, decamethylenediamine, undecamethylenediamine, and dodecamethylenediamine, to which, however, the compound is not limited. Among these, preferred is hexamethylenediamine. These may be used singly or in combination of two or more kinds thereof.

The diamine unit in the polyamide resin (A) preferably contains the aromatic diamine unit represented by the general formula (I-1) and/or the alicyclic diamine unit represented by the general formula (I-2), from the viewpoints of imparting an excellent gas barrier property to the polyamide resin (A), and in addition, improving the transparency and the color of the composition and facilitating the moldability of ordinary thermoplastic resins; but from the viewpoint of imparting suitable crystallinity to the polyamide resin (A), the compound preferably contains the linear aliphatic diamine unit represented by the general formula (1-3). In particular, from the viewpoint of the oxygen absorption performance and the properties of the polyamide resin (A), the compound preferably contains the aromatic diamine unit represented by the general formula (I-1).

The diamine unit in the polyamide resin (A) preferably contains a m-xylylenediamine unit in an amount of 50%

by mol or more from the viewpoint of making the polyamide resin (A) express an excellent gas barrier property, and in addition, facilitating the moldability of ordinary thermoplastic resins; and the content is preferably 70% by mol or more, more preferably 80% by mol or more, and even more preferably 90% by mol or more, and is preferably 100% by mol or less.

Examples of the compound that can constitute the other diamine unit than the diamine units represented by any of the general formulae (1-1) to (1-3) include aromatic diamines such as paraphenylenediamine; alicyclic diamines such as 1,3-diaminocyclohexane and 1,4-diaminocyclohexane; aliphatic diamines such as N-methyethylenediamine, 2-methyl-1,5-pentanediamine and 1-amino-3-aminomethyl-3,5,5-trimethylcyclohexane; and ether bond-containing polyether diamines such as typically Jeffamine and Elastamine (both trade names), manufactured by Huntsman Corporation, to which, however, the present invention is not limited. These may be used singly or in combination of two or more kinds thereof.

1-2. Dicarboxylic Acid Unit

The dicarboxylic acid unit in the polyamide resin (A) contains the linear aliphatic dicarboxylic acid unit represented by the general formula (II-1) and/or the aromatic dicarboxylic acid unit represented by the general formula (II-2) in an amount in total of 50% by mol or more in the dicarboxylic acid unit, from the viewpoint of the reactivity in polymerization and the crystallinity and the moldability of the polyamide resin (A); and the content is preferably 70% by mol or more, more preferably 80% by mol or more, and even more preferably 90% by mol or more, and is preferably 100% by mol or less.

The compound that can constitute the other dicarboxylic acid unit than the dicarboxylic acid unit represented by the general formula (II-1) or (II-2) includes dicarboxylic acids such as oxalic acid, malonic acid, fumaric acid, maleic acid, 1,3-benzene-diacetic acid, and 1,4-benzene-diacetic acid, to which, however, the present invention is not limited.

In the dicarboxylic acid unit in the polyamide resin (A), the content ratio of the linear aliphatic dicarboxylic acid unit to the aromatic dicarboxylic acid unit (linear aliphatic dicarboxylic acid unit/aromatic dicarboxylic acid unit) is not specifically defined, and may be suitably determined depending on the intended use. For example, in the case where the glass transition temperature of the polyamide resin (A) is elevated and the crystallinity of the polyamide resin (A) is thereby desired to be lowered, the molar ratio of linear aliphatic dicarboxylic acid unit/aromatic dicarboxylic acid unit is preferably from 0/100 to 60/40 with respect to the total of the two of 100, and is more preferably from 0/100 to 40/60, and even more preferably from 0/100 to 30/70. In the case where the glass transition temperature of the polyamide resin (A) is lowered and the polyamide resin (A) is thereby desired to be more flexible, then the molar ratio of linear aliphatic dicarboxylic acid unit/aromatic dicarboxylic acid unit is preferably from 40/60 to 100/0 with respect to the total of the two of 100, and is more preferably from 60/40 to 100/0, and even more preferably from 70/30 to 100/0.

1-2-1. Linear Aliphatic Dicarboxylic Acid Unit

In the case where the polyamide resin (A) is desired to impart a suitable glass transition temperature and a suitable crystallinity to the polyamide resin composition of the present invention, and in addition, desired to impart suitable flexibility necessary for packaging materials and packaging containers, the polyamide resin (A) preferably contains the linear aliphatic dicarboxylic acid unit represented by the general formula (II-1).

In the general formula (II-1), n represents an integer of from 2 to 18, preferably from 3 to 16, more preferably from 4 to 12, and even more preferably from 4 to 8.

The compound that can constitute the linear aliphatic dicarboxylic acid unit represented by the general formula (II-1) includes succinic acid, glutaric acid, adipic acid, pimelic acid, suberic acid, azelaic acid, sebacic acid, 1,10-decanedicarboxylic acid, 1,11-undecanedicarboxylic acid, and 1,12-dodecanedicarboxylic acid, to which, however, the present invention is not limited. These may be used singly or in combination of two or more kinds thereof.

The type of the linear aliphatic dicarboxylic acid unit represented by the general formula (II-1) can be suitably determined depending on the intended use thereof. The linear aliphatic dicarboxylic acid unit in the polyamide resin (A) preferably contains at least one selected from a group consisting of an adipic acid unit, a sebacic acid unit and a 1,12-dodecanedicarboxylic acid unit in an amount in total of 50% by mol or more in the linear aliphatic dicarboxylic acid unit, from the viewpoint of imparting an excellent gas barrier property to the polyamide resin composition of the present invention and, in addition, from the viewpoint that the packaging materials and the packaging containers can still keep heat resistance after thermal sterilization thereof; and the content is more preferably 70% by mol or more, even more preferably 80% by mol or more, and particularly preferably 90% by mol or more, and is preferably 100% by mol or less.

The linear aliphatic dicarboxylic acid unit in the polyamide resin (A) preferably contains an adipic acid unit in an amount of 50% by mol or more in the linear aliphatic dicarboxylic acid unit from the viewpoint that the gas barrier property of the polyamide resin composition of the present invention and of suitable thermal properties such as suitable glass transition temperature or melting point thereof. The linear aliphatic dicarboxylic acid unit in the polyamide resin (A) preferably contains a sebacic acid unit in an amount of 50% by mol or more in the linear aliphatic dicarboxylic acid unit from the viewpoint of imparting a suitable gas barrier property and molding workability to the polyamide resin

composition of the present invention; and in the case where the polyamide resin composition of the present invention is used for those that are required to have low water absorbability, weatherability, and heat resistance, the linear aliphatic dicarboxylic acid unit preferably contains a 1,12-dodecanedicarboxylic acid unit in an amount of 50% by mol or more.

1-2-2. Aromatic Dicarboxylic Acid Unit

The polyamide resin (A) preferably contains the aromatic dicarboxylic acid unit represented by the general formula (II-2) in order to impart a better gas barrier property to the polyamide resin composition of the present invention, and in addition, to facilitate the molding workability of the packaging materials and packaging containers.

In the general formula (II-2), Ar represents an arylene group. The arylene group is an arylene group having preferably from 6 to 30 carbon atoms, and more preferably from 6 to 15 carbon atoms, and examples thereof include a phenylene group and a naphthylene group.

Examples of the compound that can constitute the aromatic dicarboxylic acid unit represented by the general formula (II-2) include terephthalic acid, isophthalic acid, and 2,6-naphthalenedicarboxylic acid, to which, however, the present invention is not limited. These may be used singly or in combination of two or more kinds thereof.

The type of the aromatic dicarboxylic acid unit represented by the general formula (II-2) can be suitably determined depending on the intended use thereof. The aromatic dicarboxylic acid unit in the polyamide resin (A) preferably contains at least one selected from a group consisting of an isophthalic acid unit, a terephthalic acid unit, and a 2,6-naphthalenedicarboxylic acid unit in an amount in total of 50% by mol or more in the aromatic dicarboxylic acid unit; and the content is more preferably 70% by mol or more, even more preferably 80% by mol or more, and particularly preferably 90% by mol or more, and is preferably 100% by mol or less. Further, of those, isophthalic acid and/or terephthalic acid are preferably contained in the aromatic dicarboxylic acid unit. The content ratio of the isophthalic acid unit to the terephthalic acid unit (isophthalic acid unit/terephthalic acid unit) is not particularly limited, and may be suitably determined depending on the intended use thereof. For example, from the viewpoint of suitably lowering the glass transition temperature and the crystallinity of the compound, the molar ratio is preferably from 0/100 to 100/0, more preferably from 0/100 to 60/40, even more preferably from 0/100 to 40/60, and even still more preferably from 0/100 to 30/70, with respect to the total of the two units of 100.

1-3. Tertiary Hydrogen-Containing Carboxylic Acid Unit

In the present invention, the tertiary hydrogen-containing carboxylic acid unit in the polyamide resin (A) has at least one amino group and at least one carboxyl group or has at least two carboxyl groups from the viewpoint of polymerization of the polyamide resin (A). Specific examples thereof include constitutional units represented by any of the following general formula (III), (IV), or (V):

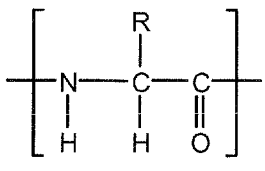

(III)

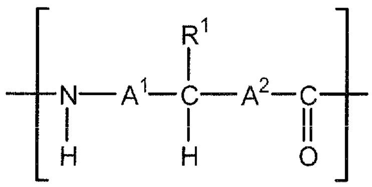

(IV)

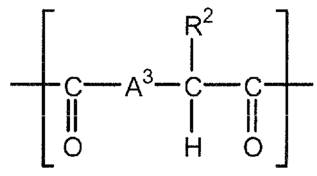

(V)

wherein, in the general formulae (III) to (V), R, $R^1$, and $R^2$ each represent a substituent, and $A^1$ to $A^3$ each represent a single bond or a divalent linking group; however, a case where $A^1$ and $A^2$ in the general formula (IV) are both single bonds is excluded.

The polyamide resin (A) contains a tertiary hydrogen-containing carboxylic acid unit. By incorporating such a tertiary hydrogen-containing carboxylic acid unit as a copolymerization component, the polyamide resin (A) can exhibit excellent oxygen absorption performance.

In the present invention, the mechanism that the polyamide resin (A) having a tertiary hydrogen-containing carboxylic acid unit could exhibit good oxygen absorption performance would be, though not clarified as yet, considered as follows. In the compound that can constitute a tertiary hydrogen-containing carboxylic acid unit, an electron-withdrawing group and an electron-donating group bond to the same carbon atom, and therefore, owing to the phenomenon that is called a captodative effect of energetically stabilizing the unpaired electrons existing on that carbon atom, an extremely stable radical could be formed. That is, a carboxyl group is an electron-withdrawing group, and since the carbon atom adjacent to the group, to which a tertiary hydrogen atom bonds, is electron-poor ($\delta^+$), the tertiary hydrogen atom also becomes electron-poor ($\delta^+$), therefore forming a radical as dissociated as a proton. When oxygen and water

exist there, oxygen could react with the radical and therefore the compound could exhibit oxygen absorption performance. Further, it has been proven that in an environment having a higher humidity and a higher temperature, the reactivity is higher.

In the general formulae (III) to (V), R, $R^1$, and $R^2$ each represent a substituent. The substituent represented by R, $R^1$, and $R^2$ in the present invention includes a halogen atom (for example, a chlorine atom, a bromine atom, and an iodine atom), an alkyl group (a linear, branched, or cyclic alkyl group having from 1 to 15 carbon atoms, and preferably from 1 to 6 carbon atoms, for example, a methyl group, an ethyl group, an n-propyl group, an isopropyl group, a t-butyl group, an n-octyl group, a 2-ethylhexyl group, a cyclopropyl group, and a cyclopentyl group), an alkenyl group (a linear, branched, or cyclic alkenyl group having from 2 to 10 carbon atoms, and preferably from 2 to 6 carbon atoms, for example, a vinyl group and an allyl group), an alkenyl group (an alkenyl group having from 2 to 10 carbon atoms, and preferably from 2 to 6 carbon atoms, for example, an ethynyl group and a propargyl group), an aryl group (an aryl group having from 6 to 16 carbon atoms, and preferably from 6 to 10 carbon atoms, for example, a phenyl group, a naphthyl group), a heterocyclic group (a monovalent group having 1 to 12 carbon atoms, and preferably from 2 to 6 carbon atoms, which is obtained from a 5-membered or 6-membered, aromatic or non-aromatic heterocyclic compound by removing one hydrogen atom therefrom, for example, a 1-pyrazolyl group, a 1-imidazolyl group, and a 2-furyl group), a cyano group, a hydroxyl group, a nitro group, an alkoxy group (a linear, branched, or cyclic alkoxy group having from 1 to 10 carbon atoms, and preferably from 1 to 6 carbon atoms, for example, a methoxy group and an ethoxy group), an aryloxy group (an aryloxy group having from 6 to 12 carbon atoms, and preferably from 6 to 8 carbon atoms, for example, a phenoxy group), an acyl group (a formyl group, an alkylcarbonyl group having from 2 to 10 carbon atoms, and preferably from 2 to 6 carbon atoms, or an arylcarbonyl group having from 7 to 12 carbon atoms, and preferably from 7 to 9 carbon atoms, for example, an acetyl group, a pivaloyl group, and a benzoyl group), an amino group (an amino group, an alkylamino group having from 1 to 10 carbon atoms, and preferably from 1 to 6 carbon atoms, an anilino group having from 6 to 12 carbon atoms, and preferably from 6 to 8 carbon atoms, or a heterocyclic amino group having from 1 to 12 carbon atoms, and preferably from 2 to 6 carbon atoms, for example, an amino group, a methylamino group, and an anilino group), a mercapto group, an alkylthio group (an alkylthio group having from 1 to 10 carbon atoms, and preferably from 1 to 6 carbon atoms, for example, a methylthio group and an ethylthio group), an arylthio group (an arylthio group having from 6 to 12 carbon atoms, and preferably from 6 to 8 carbon atoms, for example, a phenylthio group), a heterocyclic thio group (a heterocyclic thio group having from 2 to 10 carbon atoms, and preferably from 2 to 6 carbon atoms, for example, a 2-benzothiazolylthio group), and an imido group (an imido group having from 2 to 10 carbon atoms, and preferably from 4 to 8 carbon atoms, for example, an N-succinimido group and an N-phthalimido group).

Among these functional groups, those having a hydrogen atom may be further substituted with the above-mentioned group. Examples thereof include an alkyl group substituted with a hydroxyl group (for example, a hydroxyethyl group), an alkyl group substituted with an alkoxy group (for example, a methoxyethyl group), an alkyl group substituted with an aryl group (for example, a benzyl group), an aryl group substituted with an alkyl group (for example, a p-tolyl group), and an aryloxy group substituted with an alkyl group (for example, a 2-methylphenoxy group), to which, however, the present invention is not limited.

Further, in the case where the functional group is further substituted, the above-mentioned carbon number does not include the carbon number of the additional substituent. For example, a benzyl group is considered as an alkyl group having one carbon atom and substituted with a phenyl group, but is not considered as an alkyl group substituted with a phenyl group and having 7 carbon atoms. Unless otherwise specifically indicated, the same shall apply to the carbon number referred to hereinunder.

In the general formulae (IV) and (V), $A^1$ to $A^3$ each represent a single bond or a divalent linking group. However, the general formula (IV) excludes a case where $A^1$ and $A^2$ are both single bonds. The divalent linking group includes, for example, a linear, branched, or cyclic alkylene group (an alkylene group having 1 to 12 carbon atoms, and preferably 1 to 4 carbon atoms, for example, a methylene group, an ethylene group), an aralkylene group (an aralkylene group having 7 to 30 carbon atoms, and preferably 7 to 13 carbon atoms, for example, a benzylidene group), and an arylene group (an arylene group having 6 to 30 carbon atoms, and preferably 6 to 15 carbon atoms, for example, a phenylene group). These may further have a substituent. The substituent may include the functional groups as exemplified hereinabove for the substituents represented by R, $R^1$, and $R^2$. Examples thereof include an arylene group substituted with an alkyl group (for example, a xylylene group), to which, however, the present invention is not limited.

Preferably, the polyamide resin (A) contains at least one of the constitutional units represented by any of the general formula (III), (IV), or (V). Among these, more preferred is a carboxylic acid unit having a tertiary hydrogen atom at the $\alpha$ carbon atom (carbon atom adjacent to the carboxyl group), from the viewpoint of the availability of the starting material and of the advanced oxygen absorbability of the compound; and particularly preferred is the constitutional unit represented by the general formula (III).

R in the general formula (III) is as mentioned above. Above all, more preferred are a substituted or unsubstituted alkyl group and a substituted or unsubstituted aryl group; even more preferred are a substituted or unsubstituted alkyl group having from 1 to 6 carbon atoms, and a substituted or unsubstituted aryl group having from 6 to 10 carbon atoms;

and particularly preferred are a substituted or unsubstituted alkyl group having from 1 to 4 carbon atoms, and a substituted or unsubstituted phenyl group.

Preferred specific examples of R include a methyl group, an ethyl group, an n-propyl group, an isopropyl group, an n-butyl group, a t-butyl group, a 1-methylpropyl group, a 2-methylpropyl group, a hydroxymethyl group, a 1-hydroxyethyl group, a mercaptomethyl group, a methylsulfanylethyl group, a phenyl group, a naphthyl group, a benzyl group, and a 4-hydroxybenzyl group, to which, however, the present invention is not limited. Among these, more preferred are a methyl group, an ethyl group, an isopropyl group, a 2-methylpropyl group, and a benzyl group.

Examples of the compound that can constitute the constitutional unit represented by the general formula (III) include α-amino acids such as alanine, 2-aminobutyric acid, valine, norvaline, leucine, norleucine, tert-leucine, isoleucine, serine, threonine, cysteine, methionine, 2-phenylglycine, phenylalanine, tyrosine, histidine, tryptophane, and proline, to which, however, the present invention is not limited.

Examples of the compound that can constitute the constitutional unit represented by the general formula (IV) include β-amino acids such as 3-aminobutyric acid; and the compound that can constitute the constitutional unit represented by the general formula (V) include dicarboxylic acids such as methylmalonic acid, methylsuccinic acid, malic acid, and tartaric acid, to which, however, the present invention is not limited.

These may be any of a D form, an L form, or a racemic form, and may also be an allo-form. These may be used singly or in combination of two or more kinds thereof.

Among these, particularly preferred is an α-amino acid having a tertiary hydrogen atom at the α carbon atom, from the viewpoint of the availability of the starting material and of the advanced oxygen absorbability of the compound. Among the α-amino acids, most preferred is alanine from the viewpoint of ease of availability, low cost and ease of polymerizability thereof, and a low low yellow index (YI) of a polymer. Alanine has a relatively low molecular weight and a high copolymerization ratio thereof per gram of the polyamide resin (A), and therefore, it has good oxygen absorption performance per gram of the polyamide resin (A).

Furthermore, the purity of the compound that can constitute the tertiary hydrogen-containing carboxylic acid unit is preferably 95% or more, from the viewpoint of the influence thereof on the polymerization such as delay in polymerization rate thereof as well as on the quality such as the yellow index of the polymer, and is more preferably 98.5% or more, and even more preferably 99% or more. The amount of the sulfate ion and the ammonium ion to be contained in the compound as impurities therein is preferably 500 ppm by mass or less, more preferably 200 ppm by mass or less, and even more preferably 50 ppm by mass or less.

1-4. ω-Aminocarboxylic Acid Unit

In the case where the polyamide resin composition of the present invention is needed to have flexibility, the polyamide resin (A) may further contain an (ω-aminocarboxylic acid unit represented by the following general formula (VI), in addition to the above-mentioned diamine unit, dicarboxylic acid unit, and tertiary hydrogen-containing carboxylic acid unit therein:

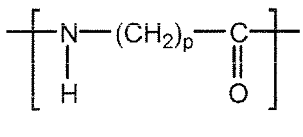

(VI)

wherein, in the general formula (VI), p represents an integer of from 2 to 18.

The content of the ω-aminocarboxylic acid unit is preferably from 0.1 to 49.9% by mol, more preferably from 3 to 40% by mol, and even more preferably from 5 to 35% by mol, in all the constitutional units of the polyamide resin (A). However, the total of the diamine unit, the dicarboxylic acid unit, the tertiary hydrogen-containing carboxylic acid unit, and the ω-aminocarboxylic acid unit should not exceed 100% by mol.

In the general formula (VI), p represents an integer of from 2 to 18, preferably from 3 to 16, more preferably from 4 to 14, and even more preferably from 5 to 12.

The compound that can constitute the ω-aminocarboxylic acid unit represented by the general formula (VI) includes an ω-aminocarboxylic acid having from 5 to 19 carbon atoms, and a lactam having from 5 to 19 carbon atoms. The ω-aminocarboxylic acid having from 5 to 19 carbon atoms includes 6-aminohexanoic acid and 12-aminododecanoic acid; and the lactam having from 5 to 19 carbon atoms includes ε-caprolactam and laurolactam, to which, however, the present invention is not limited. These may be used singly or in combination of two or more kinds thereof.

Preferably, the ω-aminocarboxylic acid unit contains a 6-aminohexanoic acid unit and/or a 12-aminododecanoic

acid unit in an amount in total of 50% by mol or more in the ω-aminocarboxylic acid unit; and the content is more preferably 70% by mol or more, and even more preferably 80% by mol or more, and even more preferably 90% by mol or more, and is preferably 100% by mol or less.

1-5. Degree of Polymerization of Polyamide Resin (A)

For the degree of polymerization of the polyamide resin (A), a relative viscosity thereof is used. The relative viscosity thereof is preferably from 1.8 to 4.2, more preferably from 1.9 to 4.0, and even more preferably from 2.0 to 3.8, from the viewpoint of the strength and appearance of the molded article and of the molding workability thereof.

The relative viscosity as referred to herein is as follows. One gram of the polyamide resin (A) is dissolved in 100 mL of 96% sulfuric acid, and using a Cannon Fenske type viscometer, the dropping time (t) thereof is measured at 25°C. The dropping time (to) of 96% sulfuric acid is also measured in the same manner, and the relative viscosity of the compound is represented by the following expression.

$$\text{Relative Viscosity} = t/t_0$$

1-6. Terminal Amino Group Concentration

The oxygen absorption rate of the polyamide resin composition of the present invention and the oxidative deterioration of the polyamide resin composition owing to oxygen absorption can be controlled by changing the terminal amino group concentration of the polyamide resin (A). The terminal amino group concentration thereof is preferably from 5 to 150 μeq/g from the viewpoint of the balance between the oxygen absorption rate and the oxidative deterioration thereof, more preferably from 10 to 100 μeq/g, and even more preferably from 15 to 80 μeq/g.

In an oxygen absorbing resin composition produced by adding a transition metal compound to polymethaxylylene adipamide according to the related art, when the terminal amino group concentration becomes high, the oxygen absorption performance of the composition tends to lower; and consequently, for example, in the case where the terminal amino group concentration may have some influence on the other desired performance such as a yellow index or the like of polyamide, it is often impossible to satisfy both the other desired performance and the oxygen absorption performance. However, since the polyamide resin composition of the present invention has the range of the terminal amino group concentration as described above, there is no significant difference in the oxygen absorption performance of the polyamide by the transition metal compound, and thus, the composition is excellent in that the terminal amino group concentration of the polyamide resin (A) can be controlled in any desired range in accordance with the other desired performance of the composition.

1-7. Production Method for Polyamide Resin (A)

The polyamide resin (A) can be produced through polycondensation of a diamine component that can constitute the above-mentioned diamine unit, a dicarboxylic acid component that can constitute the above-mentioned dicarboxylic acid unit, a tertiary hydrogen-containing carboxylic acid component that can constitute the above-mentioned tertiary hydrogen-containing carboxylic acid unit, and optionally an ω-aminocarboxylic acid component that can constitute the above-mentioned ω-aminocarboxylic acid unit, in which the degree of polymerization can be controlled by controlling the polycondensation condition. A small amount of a monoamine or a monocarboxylic acid, serving as a molecular weight regulating agent, may be added to the system during polycondensation. In order to control the polycondensation reaction and to make the produced polymer have a desired degree of polymerization, the ratio (molar ratio) of the diamine component to the carboxylic acid component which constitutes the polyamide resin (A) may be deviated from 1.

The polycondensation method for the polyamide resin (A) includes a reactive extrusion method, a pressurized salt method, a normal-pressure instillation method, and a pressurized instillation method, to which, however, the present invention is not limited. Further, when the reaction temperature is as low as possible, the polyamide resin (A) can be prevented from yellowing or gelling, and the polyamide resin (A) having stable properties can thus be obtained.

1-7-1. Reactive Extrusion Method

The reactive extrusion method is a method of reacting a polyamide including a diamine component and a dicarboxylic acid component (a polyamide corresponding to the precursor of the polyamide resin (A)) or a polyamide including a diamine component, a dicarboxylic acid component, and an ω-aminocarboxylic acid component (a polyamide corresponding to the precursor of the polyamide resin (A)) with a tertiary hydrogen-containing carboxylic acid component

by melt-kneading them in an extruder. This is a method of incorporating the tertiary hydrogen-containing carboxylic acid component into the skeleton of the polyamide through interamidation reaction. Preferably, a screw suitable to reactive extrusion is used and a double-screw extruder having a large L/D is used for fully attaining the reaction. This method is simple and is favorable for producing the polyamide resin (A) that contains a small amount of a tertiary hydrogen-containing carboxylic acid component.

1-7-2. Pressurized Salt Method

The pressurized salt method is a method of melt polycondensation under pressure, starting from a nylon salt as the starting material. Concretely, an aqueous solution of a nylon salt including a diamine component, a dicarboxylic acid component, a tertiary hydrogen-containing carboxylic acid component, and optionally an ω-aminocarboxylic acid component is produced, and thereafter the aqueous solution is concentrated and heated under pressure for polycondensation with removing the condensation water. Inside the reactor, while the pressure is gradually restored to normal pressure, the system is heated up to around a temperature of (melting point + 10°C) of the polyamide resin (A) and kept as such, and thereafter the inner pressure is gradually reduced to -0.02 MPaG and kept as such at the temperature to continue the polycondensation. After the system has reached a predetermined stirring torque, the reactor was pressurized with nitrogen up to 0.3 MPaG or so and the polyamide resin (A) is then collected.

The pressurized salt method is useful in a case where a volatile component is used as the monomer, and is a preferred polycondensation method for the case where the copolymerization ratio of the tertiary hydrogen-containing carboxylic acid component is high. In particular, the method is favorable for the case of producing the polyamide resin (A), in which the tertiary hydrogen-containing carboxylic acid unit accounts for 15% by mol or more of all the constitutional units of the polyamide resin (A). According to the pressurized salt method, the tertiary hydrogen-containing carboxylic acid component can be prevented from evaporating away, and further, polycondensation of the tertiary hydrogen-containing carboxylic acid components alone can be prevented, and accordingly, the polycondensation reaction can be carried out smoothly and a polyamide resin (A) having excellent properties is obtained.

1-7-3. Normal-Pressure Instillation Method

The normal-pressure instillation method is a method where a diamine component is continuously added dropwise to a mixture produced by heating and melting a dicarboxylic acid component, a tertiary hydrogen-containing carboxylic acid component, and optionally an ω-aminocarboxylic acid component, under normal pressure for polycondensation with removing the condensation water. During the polycondensation reaction, the reaction system is heated in order that the reaction temperature is not lower than the melting point of the polyamide resin (A) to be produced.

In the normal-pressure instillation method, the yield per batch is large as compared with that in the above-mentioned pressurized salt method, since the method does not require water for salt dissolution, and in addition, since the method does not require vaporization and condensation of the starting material components, the reaction speed decreases less and the process time can be shortened.

1-7-4. Pressurized Instillation Method

In the pressurized instillation method, first a dicarboxylic acid component, a tertiary hydrogen-containing carboxylic acid component, and optionally an ω-aminocarboxylic acid component are put into the polycondensation reactor, and then the components are stirred and mixed in melt to produce a mixture. Next, while the reactor is pressurized preferably up to from 0.3 to 0.4 MPaG or so, a diamine component is continuously added dropwise to the mixture for polycondensation with removing the condensation water. During the polycondensation reaction, the reaction system is heated in order that the reaction temperature is not lower than the melting point of the polyamide resin (A) to be produced. After the components have reached a predetermined molar ratio, the addition of the diamine component is finished. While the reactor is gradually restored to normal pressure, the system therein is heated up to around a temperature of (melting point + 10°C) of the polyamide resin (A) to be produced, and kept as such. Subsequently, while the reactor is gradually depressurized to -0.02 MPaG, the system therein is kept as such at the temperature to continue the polycondensation. After the system has reached a predetermined stirring torque, the reactor was pressurized with nitrogen up to 0.3 MPaG or so and the polyamide resin (A) is then collected.

Like the pressurized salt method, the pressurized instillation method is useful in a case where a volatile component is used as the monomer, and is a preferred polycondensation method for the case where the copolymerization ratio of the tertiary hydrogen-containing carboxylic acid component is high. In particular, the method is favorable for the case of producing the polyamide resin (A), in which the tertiary hydrogen-containing carboxylic acid unit accounts for 15% by mol or more of all the constitutional units of the polyamide resin (A). According to the pressurized instillation method, the tertiary hydrogen-containing carboxylic acid component can be prevented from evaporating away, and

further, polycondensation of the tertiary hydrogen-containing carboxylic acid components alone can be prevented, and accordingly, the polycondensation reaction can be carried out smoothly and the polyamide resin (A) having excellent properties is obtained. Further, different from the pressurized salt method, the pressurized instillation method does not require water for salt dissolution and therefore the yield per batch according to the method is large. In addition, in the method, the reaction time can be shortened and therefore the system can be prevented from gelling, like in the normal-pressure instillation method. Accordingly, the polyamide resin (A) having a low yellow index is obtained.

1-7-5. Step of Increasing Degree of Polymerization

The polyamide resin (A) produced according to the above-mentioned polycondensation method can be used directly as it is, however, the compound may be processed in a step of further increasing the degree of polymerization thereof. The step of increasing the degree of polymerization includes reactive extrusion in an extruder and solid-phase polymerization. As the heating apparatus for use for solid-phase polymerization, preferred are a continuous heating and drying apparatus; a rotary drum-type heating apparatus such as a tumble drier, a conical drier, and a rotary drier; and a conical heating apparatus equipped with a rotary blade inside it, such as a Nauta mixer. Not limited to these, any ordinary method and apparatus can be used. In particular, for solid-phase polymerization to give the polyamide resin (A), preferred is use of a rotary drum-type heating apparatus among the above, since the system can be airtightly sealed up and the polycondensation can be readily promoted therein in a condition where oxygen to cause discoloration is eliminated.

1-7-6. Phosphorus Atom-Containing Compound, Alkali Metal Compound

In polycondensation to produce the polyamide resin (A), preferred is adding a phosphorus atom-containing compound from the viewpoint of promoting the amidation reaction.

Examples of the phosphorus atom-containing compound include phosphinic acid compounds such as dimethylphosphinic acid and phenylmethylphosphinic acid; hypophosphorous acid compounds such as hypophosphorous acid, sodium hypophosphite, potassium hypophosphite, lithium hypophosphite, magnesium hypophosphite, calcium hypophosphite, and ethyl hypophosphite; phosphonic acid compounds such as phosphonic acid, sodium phosphonate, potassium phosphonate, lithium phosphonate, magnesium phosphonate, calcium phosphonate, phenylphosphonic acid, ethylphosphonic acid, sodium phenylphosphonate, potassium phenylphosphonate, lithium phenylphosphonate, diethyl phenylphosphonate, sodium ethylphosphonate, and potassium ethylphosphonate; phosphonous acid compounds such as phosphonous acid, sodium phosphonite, lithium phosphonite, potassium phosphonite, magnesium phosphonite, calcium phosphonite, phenylphosphonous acid, sodium phenylphosphonite, potassium phenylphosphonite, lithium phenylphosphonite, and ethyl phenylphosphonite; and phosphorous acid compounds such as phosphorous acid, sodium hydrogenphosphite, sodium phosphite, lithium phosphite, potassium phosphite, magnesium phosphite, calcium phosphite, triethyl phosphite, triphenyl phosphite, and pyrophosphorous acid.

Among these, particularly preferred for use herein are metal hypophosphites such as sodium hypophosphite, potassium hypophosphite, and lithium hypophosphite, as their effect of promoting amidation is high and their effect of preventing discoloration is excellent. In particular, sodium hypophosphite is preferred. However, the phosphorus atom-containing compounds usable in the present invention are not limited to the above.

The amount of the phosphorus atom-containing compound to be added is preferably from 0.1 to 1,000 ppm by mass in terms of the phosphorus atom concentration in the polyamide resin (A), more preferably from 1 to 600 ppm by mass, and even more preferably from 5 to 400 ppm by mass. When the amount is 0.1 ppm by mass or more, the polyamide resin (A) is hardly discolored during polymerization and the transparency thereof could be high. When the amount is 1,000 ppm by mass or less, the polyamide resin (A) hardly gels and, in addition, incorporation of few fish eyes that may be caused by the phosphorus atom-containing compound can be suppressed in a molded article, and therefore, the appearance of the molded article could be good.

Moreover, preferably, an alkali metal compound is added to the polycondensation system to give the polyamide resin (A), along with the phosphorus atom-containing compound thereto. A sufficient amount of a phosphorus atom-containing compound must be present in the system in order to prevent the discoloration of the polyamide resin (A) during polycondensation, which, however, may rather cause gelling of the polyamide resin (A) as the case may be. Therefore, in order to control the amidation reaction speed, it is preferable to add an alkali metal compound to the system along with the phosphorus atom-containing compound thereto.

The alkali metal compound is preferably an alkali metal hydroxide, an alkali metal acetate, an alkali metal carbonate, or an alkali metal alkoxide. Specific examples of the alkali metal compound usable in the present invention include lithium hydroxide, sodium hydroxide, potassium hydroxide, rubidium hydroxide, cesium hydroxide, lithium acetate, sodium acetate, potassium acetate, rubidium acetate, cesium acetate, sodium methoxide, sodium ethoxide, sodium propoxide, sodium butoxide, potassium methoxide, lithium methoxide, and sodium carbonate, to which, however, the

present invention is not limited. The ratio (molar ratio) of the phosphorus atom-containing compound to the alkali metal compound, phosphorus atom-containing compound/alkali metal compound, is preferably within a range of 1.0/0.05 to 1.0/1.5, from the viewpoint of controlling the polymerization speed and reducing the yellow index, more preferably from 1.0/0.1 to 1.0/1.2, and even more preferably from 1.0/0.2 to 1.0/1.1.

[Polyamide Resin (B)]

Examples of the polyamide resin (B) that can be used in the present invention (the "polyamide" referred herein is not the "polyamide resin (A)") include a polyamide containing a unit derived from a lactam or an aminocarboxylic acid as a major constitutional unit, an aliphatic polyamide containing a unit derived from an aliphatic diamine and an aliphatic dicarboxylic acid as a major constitutional unit, a partially aromatic polyamide containing a unit derived from an aliphatic diamine and an aromatic dicarboxylic acid as a major constitutional unit, and a partially aromatic polyamide containing a unit derived from an aromatic diamine and an aliphatic dicarboxylic acid as a major constitutional unit, and a monomer unit other than the major constitutional unit may be copolymerized therewith, if necessary.

As the lactam or aminocarboxylic acid, lactams such as ε-caprolactam and laurolactam, aminocarboxylic acids such as aminocaproic acid and aminoundecanoic acid, an aromatic aminocarboxylic acid such as para-aminomethylbenzoic acid, or the like can be used.

As the aliphatic diamine, an aliphatic diamine having from 2 to 12 carbon atoms and a functional derivative thereof can be used. An alicyclic diamine may also be used therefor. The aliphatic diamine may be a linear aliphatic diamine or a chained aliphatic diamine having a branched chain form. Specific examples of the linear aliphatic diamine include an aliphatic diamine such as ethylenediamine, 1-methylethylenediamine, 1,3-propylenediamine, tetramethylenediamine, pentamethylenediamine, hexamethylenediamine, heptamethylenediamine, octamethylenediamine, nonamethylenediamine, decamethylenediamine, undecamethylenediamine, and dodecamethylenediamine. Further, specific examples of the alicyclic diamine include cyclohexanediamine, 1,3-bis(aminomethyl)cyclohexane, and 1,4-bis(aminomethyl)cyclohexane.

Furthermore, the aliphatic dicarboxylic acid is preferably a linear aliphatic dicarboxylic acid or an alicyclic dicarboxylic acid, and particularly preferably a linear aliphatic dicarboxylic acid having an alkylene group having from 4 to 12 carbon atoms. Examples of the linear aliphatic dicarboxylic acid include adipic acid, sebacic acid, malonic acid, succinic acid, glutaric acid, pimelic acid, suberic acid, azelaic acid, undecanoic acid, undecadioic acid, dodecanedioic acid, a dimer acid, and functional derivatives thereof. Examples of the alicyclic dicarboxylic acid include alicyclic dicarboxylic acids such as 1,4-cyclohexanedicarboxylic acid, hexahydroterephthalic acid, and hexahydroisophthalic acid.

Moreover, examples of the aromatic diamine include m-xylylenediamine, paraxylylenediamine, and para-bis(2-aminoethyl)benzene.

In addition, examples of the aromatic dicarboxylic acid include terephthalic acid, isophthalic acid, phthalic acid, 2,6-naphthalenedicarboxylic acid, diphenyl-4,4'-dicarboxylic acid, diphenoxyethanedicarboxylic acid, and functional derivatives thereof.

Specific examples of the polyamide include polyamide 4, polyamide 6, polyamide 10, polyamide 11, polyamide 12, polyamide 4,6, polyamide 6,6, polyamide 6,10, polyamide 6T, polyamide 9T, polyamide 6IT, polymethaxylylene adipamide (polyamide MXD6), isophthalic acid-copolymerized polymethaxylylene adipamide (polyamide MXD6I), polymethaxylylene sebacamide (polyamide MXD10), polymethaxylylene dodecanamide (polyamide MXD12), polo-1,3-bis(aminomethyl)cyclohexane adipamide (polyamide BAC6), and polyparaxylylene sebacamide (polyamide PXD10).

Furthermore, in order to increase the oxygen absorption performance, a modified polyamide resin having a carbon-carbon unsaturated bond introduced in the molecule can also be used within a range not detracting from the effects of the present invention.

Also, the polyamide resin (B) may be a blend with a resin other than the polyamide resin. In order to increase the oxygen absorption performance, a modified polyester resin having a carbon-carbon unsaturated bond introduced into polyethylene terephthalate, polybutylene terephthalate, polyethylene naphthalate, polycarbonate, polyarylate, or the like; a modified polyolefin resin having a carbon-carbon unsaturated bond introduced into polyethylene, polypropylene, or the like; a polymer including polystyrene, polymethyl methacrylate, or methacrylic acid; a modified polyvinyl-based resin having a carbon-carbon unsaturated bond introduced into an ethylene-vinyl alcohol copolymer or the like; a polyene such as polybutadiene, polyisoprene, a styrenebutadiene copolymer, and anABS resin, having a carbon-carbon unsaturated bond in the molecule, or a blend with a polyamide resin can also be used within a range not detracting from the effects of the present invention.

As the polyamide, a polyamide resin or modified polyamide resin having excellent gas barrier performance is more preferably used for the constitution of a molded article such as a container since a gas barrier property resin layer can be omitted; and a polyamide resin obtained by the polycondensation of a diamine component containing 70% by mol or more of m-xylylenediamine with a dicarboxylic acid component containing 50% by mol or more of adipic acid is more preferably used. Specific examples thereof include polyamide MXD6 and polyamide MXD6I. However, as the

shape, a pellet shape is preferably used due to its high handleability. Such resins may be used singly or in combination of two or more kinds thereof. When being used in combination, two or more kinds of resins may be melt-kneaded and resin pellets may also be mixed. In addition, pellets obtained by melt-kneading two or more kinds of the resin may further be mixed with pellets of the resins as described above.

Furthermore, as a copolymerization component of the polyamide, organic carboxylates such as a polyether containing at least one terminal amino group or terminal carboxyl group, having a number average molecular weight of from 2,000 to 20,000, and a polyether having the terminal amino group, or an amino salt of a polyether having the terminal carboxyl group can be used. Specific examples thereof include bis(aminopropyl) poly(ethylene oxide) (polyethylene glycol having a number average molecular weight of from 2,000 to 20,000).

Furthermore, the partial aromatic polyamide may contain constitutional units derived from a polyvalent carboxylic acid having three or more bases, such as trimellitic acid and pyromellitic acid in a substantially linear range.

The polyamide can be basically produced by a melt-polycondensation method in the coexistence of water or a melt-polycondensation method in the absence of water, known in the related art; a method involving further solid-polymerizing a polyamide obtained by such a melt-polycondensation method; or the like. The melt-polycondensation reaction may be carried out in one step or in several divided steps. These may be constituted with a batch type reaction device or with a continuous type reaction device. Further, the melt polycondensation step and the solid polymerization step may be operated continuously or dividedly.

3. Metal Compound (C)

The present inventors have succeeded in development of a polyamide resin composition, in which the transparency of a polyamide resin is not deteriorated and the oxygen absorption performance is further increased (WO 2012/090797). The present inventors have further extensive studies, and as a result, in the case where cobalt was used as the transition metal compound, the resin composition is easily scorched during the production and the molding of the resin composition.

The polyamide resin composition of the first invention contains at least one metal atom selected from iron, manganese, copper, and zinc as the metal compound (C). Thus, it is possible to obtain a polyamide resin composition, which is not easily scorched during the production and the molding, and has an excellent heat aging resistance. Among the metals, from the viewpoints of oxygen absorption performance and a heat aging resistance, iron and manganese are preferred.

The metal compound (C) is preferably used in the form of an inorganic salt or an organic acid salt having a low valence number of the above-mentioned metal, or a complex salt thereof.

Examples of the inorganic salt include oxides, carbonates, halides such as chloride and bromide, sulfate, nitrate, phosphate, and silicate. On the other hand, examples of the organic acid salt include carboxylate, sulfonate, and phosphonate. Further, a transition metal complex with β-diketone, β-keto acid ester, or the like can also be used.

In particular, in the present invention, from the viewpoint of exhibiting good oxygen absorption function, it is preferable to use at least one selected from carboxylates, carbonates, acetylacetonate complexes, oxides, and halides, containing the metal atoms, and it is more preferable to use at least one selected from stearate, acetate, carbonate, and acetylacetonate complexes.

The metal compound (C) used in the first invention is preferably used in the shape of powder, which can be easily melt-mixed with a polyamide resin. The particle diameter thereof is preferably 0.5 mm or less, and more preferably 0.1 mm or less. When the particle diameter of the metal compound is 0.5 mm or less, the metal compounds can be wholly and uniformly dispersed when it is mixed with a thermoplastic resin.

4. Colorant (D)

A packaging container used in food, beverage, or the like requiring oxygen absorption function may be colored in some cases since the packaging container requires an oxygen barrier property as well as a barrier against ultraviolet rays or the like. In this case, it is also necessary to blend a colorant, in addition to an ethylenically unsaturated compound such as polybutadiene, and a transition metal catalyst such as cobalt, and therefore, the mixing operation becomes complex and further, a master batch of an oxygen absorption promoter and a master batch of a colorant are easily prepared, thereby causing a problem of increasing material cost.

The present inventors have found that by blending at least one metal atom-containing colorant selected from iron, manganese, copper and zinc to the polyamide resin described in the Patent Document 6, superior oxygen absorption performance is expressed.

The colorant (D) used in the second invention contains at least one metal atom selected from iron, manganese, copper, and zinc. Among these metals, iron, copper, and manganese are preferred from the oxygen absorption performance and the heat aging resistance.

The colorant (D) is not particularly limited as long as it contains at least one metal atom selected from iron, manganese, copper, and zinc, may be either of a dye and a pigment, and may be either of an organic pigment and an inorganic pigment.

Examples of the organic pigment include copper phthalocyanine-based pigments such as phthalocyanine Blue (copper phthalocyanine $\alpha$ crystal; Pigment Blue 15, Pigment Blue 15:1, Pigment Blue 15:2, copper phthalocyanine $\beta$ crystal; Pigment Blue 15:3, Pigment Blue 15:4), and phthalocyanine Green (halogenated copper phthalocyanine, Pigment Green 7, Pigment Green 36); and organic manganese complexes such as C. I. Pigment Red 48:4, Pigment Red 52:2, and Pigment Red 58:4.

Furthermore, examples of the organic pigment include Pigment Red 179 and Pigment Violet 29, having a perylene structure; Pigment Violet 19 having a quinacridone structure; Pigment Yellow 183 having a quinophthalone structure; Pigment Yellow 95 and Pigment Red 220, having a condensed azo structure; a Pigment Yellow 191 having a monoazo structure; Pigment Yellow 95, Pigment Yellow 147, and Pigment Red 177, having an anthracene structure; a Pigment Yellow 110 having an isoindolinone structure; Pigment Orange 64, Pigment Yellow 180, Pigment Yellow 181, and Pigment Yellow 151, having a benzimidazolone structure; Pigment Red 254 having a diketopyrrolopyrrole structure; and Pigment Red 187 having a naphthol structure.

These organic pigments do not contain metals such as iron, manganese, copper, and zinc in the chemical structure. However, there is a case where even when there are pigments not containing a metal in the chemical structure, a metal is contained in actual product forms. In the present invention, even when the pigment is an organic pigment not containing a metal in the chemical structure, for detection of iron, manganese, copper, and zinc by the analysis method described in Examples described as below in the actual product forms, it is included in a "colorant having at least one metal atom selected from metals such as iron, manganese, copper, and zinc".

Examples of the inorganic pigment include metal powder, oxides, cyanide, sulfide, and phosphate.

Examples of the metal powder include bronze powder and zinc powder.

Specific examples of the oxide-based colorant include iron oxide-based colorants such as iron oxide (Pigment Red 101), iron black (black iron oxide), Bengala (red iron oxide), and iron oxide yellow (Pigment Yellow 42); and zinc oxide-based colorants such as aenka (zinc oxide). Further, the colorant may be a composite oxide containing two or more kinds of metal, and specific examples thereof include composite oxide with zinc-iron-chromium Pigment Brown 33), composite oxide with zinc-iron Pigment Yellow 119), composite oxide with iron-manganese (Pigment Black 26), composite oxide with iron-cobalt-chromium (Pigment Black 27), and zinc chromate (Pigment Yellow 36).

Specific examples of the cyanide-based colorant include Prussian blue (ferrocyanide).

Specific examples of the sulfide-based colorant include zinc sulfide.

Specific examples of the phosphate-based colorant include manganese Violet (manganese ammonium pyrophosphate).

As the colorant (D), preferred are at least one colorant selected from oxides and cyanides containing at least one metal atom selected from iron, manganese, copper, and zinc, anthracene-based colorants containing at least one metal atom selected from, iron, manganese, copper, and zinc, and copper phthalocyanine-based colorants; and more preferred is at least one colorant selected from an iron oxide-based colorant, a ferrocyanide-based colorant, and a copper phthalocyanine-based colorant.

The particle diameter of the colorant (D) used in the second invention is preferably 0.5 mm or less, and more preferably 0.1 mm or less. When the particle diameter of the metal compound is 0.5 mm or less, the metal compounds can be wholly and uniformly dispersed when being mixed with the thermoplastic resin.

Furthermore, as the particle diameter of the colorant dispersed in the Thermoplastic resin, the long diameter is preferably 100 $\mu$m or less, and more preferably 70 $\mu$m or less, from the viewpoints of colorability, retention of mechanical properties, barrier properties, or the like, whereas the short diameter is preferably 50 $\mu$m or less.

5. Additives

Depending on the desired use and performance, the polyamide resin composition of the present invention may contain additives within a range not detracting from the effect of the present invention. Examples of the additives include a lubricant, a crystallization nucleating agent, a whitening inhibitor, a delustering agent, a heat-resistant stabilizer, a weather-resistant stabilizer, a UV absorbent, a plasticizer, a flame retardant, an antistatic agent, a coloration inhibitor, and an antioxidant. In addition, the polyamide resin composition of the present invention may be melt-mixed with other resins or elastomers, if necessary.

5-1. Whitening Inhibitor

In the polyamide resin composition of the present invention, preferably, a diamide compound and/or a diester compound are added for preventing the composition from whitening after a hydrothermal treatment or after long-term

aging. The diamide compound and/or the diester compound are effective for preventing whitening due to oligomer precipitation. The diamide compound and the diester compound may be used singly or in combination thereof.

The diamide compound is preferably a diamide compound obtained from an aliphatic dicarboxylic acid having from 8 to 30 carbon atoms and a diamine having from 2 to 10 carbon atoms. An aliphatic dicarboxylic acid having 8 or more carbon atoms and a diamine having 2 or more carbon atoms are expected to exhibit the whitening preventing effect. On the other hand, an aliphatic dicarboxylic acid having 30 or less carbon atoms and a diamine having 10 or less carbon atoms may give a diamide compound well and uniformly dispersible in the resin composition. The aliphatic dicarboxylic acid may have a side chain or a double bond, but a linear saturated aliphatic dicarboxylic acid is preferred for use herein. The diamide compounds may be used singly or in combination of two or more kinds thereof.

Examples of the aliphatic dicarboxylic acid include stearic acid (C18), eicosanoic acid (C20), behenic acid (C22), montanic acid (C28), and triacontanoic acid (C30). Examples of the diamine include ethylenediamine, butylenediamine, hexanediamine, xylylenediamine, and bis(aminomethyl)cyclohexane. Diamide compounds to be obtained by combining these are preferred.

Preferred is a diamide compound to be obtained from an aliphatic dicarboxylic acid having from 8 to 30 carbon atoms and a diamine mainly including ethylenediamine, or a diamide compound to be obtained from an aliphatic dicarboxylic acid mainly including montanic acid and a diamine having from 2 to 10 carbon atoms; and particularly preferred is a diamide compound to be obtained from an aliphatic dicarboxylic acid mainly including stearic acid and a diamine mainly including ethylenediamine.

As the diester compound, preferred is a diester compound to be obtained from an aliphatic dicarboxylic acid having from 8 to 30 carbon atoms and a diol having from 2 to 10 carbon atoms. An aliphatic dicarboxylic acid having 8 or more carbon atoms and a diol having 2 or more carbon atoms are expected to exhibit the whitening preventing effect. On the other hand, an aliphatic dicarboxylic acid having 30 or less carbon atoms and a diol having 10 or less carbon atoms exhibit good and uniform dispersion in the resin composition. The aliphatic dicarboxylic acid may have a side chain or a double bond, but a linear saturated aliphatic dicarboxylic acid is preferred. The diester compounds may be used singly or in combination of two or more kinds thereof.

Examples of the aliphatic dicarboxylic acid include stearic acid (C 18), eicosanoic acid (C20), behenic acid (C22), montanic acid (C28), and triacontanoic acid (C30). Examples of the diol include ethylene glycol, propanediol, butanediol, hexanediol, xylylene glycol, and cyclohexanedimethanol. Diester compounds to be obtained by combining these are preferred.

Particularly preferred is a diester compound to be obtained from an aliphatic dicarboxylic acid mainly containing montanic acid and a diol mainly containing ethylene glycol and/or 1,3-butanediol.

The content of the diamide compound and/or the diester compound is preferably from 0.005 to 0.5% by mass with respect to 100% by mass of the resin composition, more preferably from 0.05 to 0.5% by mass, and even more preferably from 0.12 to 0.5% by mass. When the compound is added in an amount of 0.005% by mass or more with respect to 100% by mass of the resin composition, and when the compound is combined with a crystallization nucleating agent, the synergistic whitening preventing effect can be expected. Further, when the amount of the compound added is 0.5% by mass or less with respect to 100% by mass of the resin composition, the haze value of the shapes to be obtained by molding the polyamide resin composition of the present invention can be kept low.

5-2. Crystallization Nucleating Agent

A crystallization nucleating agent is preferably added to the polyamide resin composition of the present invention. The agent is effective not only for improving the transparency but also for whitening prevention through crystallization after hydrothermal treatment or after long-term aging; and by adding the crystallization nucleating agent to the polyamide resin composition, the spherocrystal size can be reduced to 1/2 or less of the wavelength of visible light. Further, when the diamide compound and/or the diester compound is used in combination with the crystallization nucleating agent, their synergistic effect exhibits much more excellent whitening prevention than the degree thereof expected from the whitening preventing effect of the individual ingredients.

Inorganic crystallization nucleating agents are those generally used for thermoplastic resins, including glass fillers (glass fibers, milled glass fibers (milled fibers), glass flakes, glass beads, and the like), calcium silicate-based fillers (wollastonite, and the like), mica, talc (powdery talc, or granular talc with rosin as a binder, and the like), kaolin, potassium titanate whiskers, boron nitride, clay such as layered silicate, nanofillers, and carbon fibers. A combination of two or more kinds thereof may be used. The maximum diameter of the inorganic crystallization nucleating agent is preferably from 0.01 to 5 $\mu$m. In particular, powdery talc having a particle size of 3.0 $\mu$m or less is preferred, powdery talc having a particle size of from 1.5 to 3.0 $\mu$m or so is more preferred, and powdery talc having a particle size of 2.0 $\mu$m or less is particularly preferred. Granular talc produced by adding rosin as a binder to the powdery talc is particularly preferred since the dispersion state thereof in the polyamide resin composition is good. As the organic crystallization nucleating agents, preferred are micro-level to nano-level size bimolecular membrane capsules containing a crystallization nucleating agent, as well as bis(benzylidene)sorbitol-based or phosphorus-containing transparent crystallization nucleating agents, rosinamide-based gelling agents, and the like. Particularly preferred are bis(benzylidene)sorbitol-based crystallization nucleating agents.

The content of the crystallization nucleating agent is preferably from 0.005 to 2.0% by mass with respect to 100% by mass of the polyamide resin (A), and more preferably from 0.01 to 1.5% by mass. At least one of the crystallization nucleating agents is added to the polyamide resin composition in combination with the diamide compound and/or the diester compound, thereby attaining a synergistic whitening preventing effect. Particularly preferably, the inorganic crystallization nucleating agent such as talc or the like is added in an amount of from 0.05 to 1.5% by mass with respect to 100% by mass of the polyamide resin (A), and the organic crystallization nucleating agent such as bis(benzylidene)sorbitol-based crystallization nucleating agent or the like is added in an amount of from 0.01 to 0.5% by mass with respect to 100% by mass of the polyamide resin (A).

The bis(benzylidene)sorbitol-based crystallization nucleating agent is selected from bis(benzylidene)sorbitol and bis(alkylbenzylidene)sorbitol, and is a condensation product (diacetal compound) to be produced through acetalization of sorbitol and benzaldehyde or alkyl-substituted benzaldehyde; and this can be conveniently produced according to various methods known in the art. In this, the alkyl may be chained or cyclic, and may be saturated or unsaturated. An ordinary production method includes a reaction of 1 mol of D-sorbitol and about 2 mols of aldehyde in the presence of an acid catalyst. The reaction temperature may vary in a broad range depending on the properties (melting point and the like) of the aldehyde to be used as the starting material for the reaction. The reaction medium may be an aqueous medium or a nonaqueous medium. One preferred method for producing the diacetal is described in U.S. Patent No. 3,721,682. The disclosed contents are limited to benzylidene sorbitols; however, the bis(alkylbenzylidene)sorbitol for use in the present invention can be suitably produced according to the method disclosed in the reference.

Specific examples of the bis(benzylidene)sorbitol-based crystallization nucleating agent (diacetal compounds) include bis(p-methylbenzylidene)sorbitol, bis(p-ethylbenzylidene)sorbitol, bis(n-propylbenzylidene)sorbitol, bis(p-isopropylbenzylidene)sorbitol, bis(p-isobutylbenzylidene)sorbitol, bis(2,4-dimethylbenzylidene)sorbitol, bis(3,4-dimethylbenzylidene)sorbitol, bis(2,4,5-trimethylbenzylidene)sorbitol, bis(2,4,6-trimethylbenzylidene)sorbitol, and bis(4-biphenylbenzylidene)sorbitol.

Examples of the alkyl-substituted benzaldehyde suitable for producing the bis(benzylidene)sorbitol-based crystallization nucleating agent include p-methylbenzaldehyde, n-propylbenzaldehyde, p-isopropylbenzaldehyde, 2,4-dimethylbenzaldehyde, 3,4-dimethylbenzaldehyde, 2,4,5-trimethylbenzaldehyde, 2,4,6-trimethylbenzaldehyde, and 4-biphenylbenzaldehyde.

When the crystallization nucleating agent such as talc, mica, and clay is added to the polyamide resin composition, the crystallization speed is accelerated by at least two times that of the polyamide resin composition to which the agent is not added. This would cause no problem in injection molding use that requires a large number of molding cycles; however, for deep-drawn cups to be molded from a stretched film or sheet, when the crystallization speed is too high, the film or sheet could not be stretched owing to crystallization or may be broken, or may have other problems of stretching unevenness, whereby in these cases, the moldability greatly worsens. However, the bis(benzylidene)sorbitol-based crystallization nucleating agent does not accelerate the crystallization speed of the polyamide resin composition even when added to the composition, and therefore, preferred is a case where the agent is used for deep-drawn cups to be molded from a stretched film or sheet.

Moreover, it has been found that the bis(benzylidene)sorbitol-based crystallization nucleating agent is effective not only for whitening prevention but also for improving the oxygen barrier property of the polyamide resin composition when added thereto. It is particularly preferable to use the bis(benzylidene)sorbitol-based crystallization nucleating agent that exhibits both effects of whitening prevention and oxygen barrier property improvement.

5-3. Layered Silicate

The polyamide resin composition of the present invention may contain a layered silicate. The addition of the layered silicate can impart not only an oxygen gas barrier property, but also a barrier property against other gases such as carbon dioxide gas, to the polyamide resin composition.

The layered silicate is a di-octahedral or tri-octahedral layered silicate having a charge density of from 0.25 to 0.6, examples of the di-octahedral one include montmorillonite and beidellite, and examples of the tri-octahedral one include hectorite and saponite. Among these, montmorillonite is preferred.

The layered silicate is preferably made in contact with an organic swelling agent, such as a polymer compound and an organic compound, in advance, thereby expanding the interlayer space of the layered silicate. As the organic swelling agent, a quaternary ammonium salt can be preferably used, and a quaternary ammonium salt having at least one alkyl or alkenyl group having 12 or more carbon atoms is preferably used.

Specific examples of the organic swelling agent include trimethyl alkyl ammonium salts such as a trimethyl dodecyl ammonium salt, a trimethyl tetradecyl ammonium salt, a trimethyl hexadecyl ammonium salt, a trimethyl octadecyl

ammonium salt, and a trimethyl eicosyl ammonium salt; trimethyl alkenyl ammonium salts such as a trimethyl octadecenyl ammonium salt and a trimethyl octadecadienyl ammonium salt; triethyl alkyl ammonium salts such as a triethyl dodecyl ammonium salt, a triethyl tetradecyl ammonium salt, a triethyl hexadecyl ammonium salt, and a triethyl octadecyl ammonium salt; tributyl alkyl ammonium salts such as a tributyl dodecyl ammonium salt, a tributyl tetradecyl ammonium salt, a tributyl hexadecyl ammonium salt, and a tributyl octadecyl ammonium salt; dimethyl dialkyl ammonium salts such as a dimethyl didodecyl ammonium salt, a dimethyl ditetradecyl ammonium salt, a dimethyl dihexadecyl ammonium salt, a dimethyl dioctadecyl ammonium salt, and a dimethyl ditallow ammonium salt; dimethyl dialkenyl ammonium salts such as a dimethyl dioctadecenyl ammonium salt and a dimethyl dioctadecadienyl ammonium salt; diethyl dialkyl ammonium salts such as a diethyl didodecyl ammonium salt, a diethyl ditetradecyl ammonium salt, a diethyl dihexadecyl ammonium salt, and a diethyl dioctadecyl ammonium salt; dibutyl dialkyl ammonium salts such as a dibutyl didodecyl ammonium salt, a dibutyl ditetradecyl ammonium salt, a dibutyl dihexadecyl ammonium salt, and a dibutyl dioctadecyl ammonium salt; methyl benzyl dialkyl ammonium salts such as a methyl benzyl dihexadecyl ammonium salt; dibenzyl dialkyl ammonium salts such as a dibenzyl dihexadecyl ammonium salt; trialkyl methyl ammonium salts such as a tridodecyl methyl ammonium salt, a tritetradecyl methyl ammonium salt, and a trioctadecyl methyl ammonium salt; trialkyl ethyl ammonium salts such as a tridodecyl ethyl ammonium salt; trialkyl butyl ammonium salts such as a tridodecyl butyl ammonium salt; and ω-amino acids such as 4-amino-n-butyric acid, 6-amino-n-caproic acid, 8-aminocaprylic acid, 10-aminodecanoic acid, 12-aminododecanoic acid, 14-aminotetradecanoic acid, 16-aminohexadecanoic acid, and 18-aminooctadecanoic acid. Further, an ammonium salt containing a hydroxyl group and/or an ether group may also be used as the organic swelling agent, and in particular, a quaternary ammonium salt containing at least one alkylene glycol residual group such as a methyl dialkyl (PAG) ammonium salt, an ethyl dialkyl (PAG) ammonium salt, a butyl dialkyl (PAG) ammonium salt, a dimethyl bis(PAG) ammonium salt, a diethyl bis(PAG) ammonium salt, a dibutyl bis(PAG) ammonium salt, a methyl alkyl bis(PAG) ammonium salt, an ethyl alkyl bis(PAG) ammonium salt, a butyl alkyl bis(PAG) ammonium salt, a methyl tri(PAG) ammonium salt, an ethyl tri(PAG) ammonium salt, a butyl tri(PAG) ammonium salt, and a tetra(PAG) ammonium salt (wherein the alkyl means an alkyl group having 12 or more carbon atoms, such as dodecyl, tetradecyl, hexadecyl, octadecyl, and eicosyl, and PAG means a polyalkylene glycol residual group, and preferably a polyethylene glycol residual group or a polypropylene glycol residual group each having 20 or less carbon atoms), may also be used as the organic swelling agent. Among these, a triethyl dodecyl ammonium salt, a trimethyl tetradecyl ammonium salt, a trimethyl hexadecyl ammonium salt, a trimethyl octadecyl ammonium salt, a dimethyl didodecyl ammonium salt, a dimethyl ditetradecyl ammonium salt, a dimethyl dihexadecyl ammonium salt, a dimethyl dioctadecyl ammonium salt, and a dimethyl ditallow ammonium salt are preferred. The organic swelling agent may be used singly or as a mixture of plural kinds thereof:

The content of the layered silicate treated with the organic swelling agent is from 0.5 to 8% by mass, more preferably from 1 to 6% by mass, and even more preferably from 2 to 5% by mass, with respect to 100% by mass of the polyamide resin composition. When the content is 0.5% by mass or more, an effect of the improvement in the gas barrier property is sufficiently obtained, whereas when the content is 8% by mass or less, a problem of formation of pinholes due to deterioration of the flexibility of the polyamide resin composition hardly occurs.

In the polyamide resin composition, the layered silicate is preferably dispersed uniformly without local aggregation. The uniform dispersion referred herein means that the layered silicate is separated into flat plates in the polyamide resin composition, and 50% or more of the flat plates have an interlayer distance of 5 nm or more. The interlayer distance as mentioned herein means the distance between barycenters of the flat plates. As the distance is larger, a better dispersed state is obtained, which results in improvement of the appearance such as the transparency, and enhancement of the gas barrier property to oxygen, a carbon dioxide gas, or the like.

5-4. Oxidizing Organic Compound

For further enhancing the oxygen absorption performance of the polyamide resin composition, an oxidizing organic compound may be added within a range not detracting from the effect of the present invention.

The oxidizing organic compound is an organic compound that oxidizes in an atmosphere where oxygen exists, automatically or in the coexistence of a catalyst or any one of heat, light, moisture, or the like, and is preferably one having an active carbon atom that facilitates hydrogen abstraction. Specific examples of the active carbon atom include a carbon atom adjacent to a carbon-carbon double bond, a tertiary carbon atom with side chains bonding thereto, and an active carbon atom including an active methylene group.

For example, vitamin C and vitamin E are examples of the oxidizing organic compound. In addition, polymers having a readily-oxidizable tertiary hydrogen in the molecule, such as polypropylene; compounds having a carbon-carbon double bond in the molecule, such as butadiene and isoprene; as well as polymers including or containing such compounds are also examples of the oxidizing organic compound. Above all, preferred are compounds and polymers having a carbon-carbon double bond from the viewpoint of the oxygen absorption performance, and the workability thereof; and more preferred are compounds containing a carbon-carbon double bond and having from 4 to 20 carbon

atoms, and oligomers or polymers containing the unit derived from such compounds.

The content of the oxidizing organic compound is preferably from 0.01 to 5% by mass, more preferably from 0.1 to 4% by mass, and even more preferably from 0.5 to 3% by mass, with respect to 100% by mass of the resin composition.

5-5. Gelling Preventing/Fish Eyes Reducing Agent

Preferably, at least one carboxylate salt selected from sodium acetate, potassium acetate, magnesium acetate, calcium stearate, magnesium stearate, sodium stearate, and their derivatives is added to the polyamide resin composition of the present invention. Examples of the derivatives thereof include metal 12-hydroxystearates such as calcium 12-hydroxystearate, magnesium 12-hydroxystearate, and sodium 12-hydroxystearate. Addition of the carboxylate salts prevents gelling of the polyamide resin composition during working and molding the composition and reduces fish eyes in the molded article, therefore enhancing the suitability of molding workability. As a formulation for more effective prevention of gelling and reduction in fish eyes, and further, for prevention of burning, it is particularly preferable to use sodium acetate having a high metal salt concentration per gram.

The amount of the carboxylate salts to be added is preferably from 400 to 10,000 ppm by mass as the concentration thereof in the polyamide resin composition, more preferably from 800 to 5,000 ppm by mass, and even more preferably from 1,000 to 3,000 ppm by mass. When the amount is 400 ppm by mass or more, the polyamide resin composition can be prevented from being thermally degraded and can be prevented from gelling. On the other hand, when 10,000 ppm by mass or less, the polyamide resin composition does not fail to be molded and does not color or whiten. When a carboxylate salt of a basic substance exists in a molten polyamide resin composition, the thermal degradation of the polyamide resin composition could be retarded and the formation of a gel that is considered to be a final degraded product could be prevented.

The above-mentioned carboxylate salts are excellent in handleability, and among these, metal stearates are inexpensive and have an additional effect as a lubricant, and are therefore preferred for use herein as capable of more stabilizing the operation of working and molding the polyamide resin composition. The morphology of the carboxylate salt is not specifically defined. Preferably, the salt is powdery and has a small particle diameter as it is easy to uniformly disperse the salt in the oxygen absorption barrier layer in dry mixing. Concretely, the particle diameter is preferably 0.2 mm or less, and more preferably 0.1 mm or less.

5-6. Antioxidant

Preferably, an antioxidant is added to the polyamide resin composition of the present invention from the viewpoint of controlling the oxygen absorption performance and inhibiting the mechanical physical properties from worsening. Examples of the antioxidant include a copper-type antioxidant, a hindered phenol-type antioxidant, a hindered amine-type antioxidant, a phosphorus-type antioxidant, and a thio-type antioxidant. Among these, a hindered phenol-type antioxidant and a phosphorus-type antioxidant are preferred.

Specific examples of the hindered phenol-type antioxidant include triethylene glycol bis[3-(3-t-butyl-5-methyl-4-hydroxyphenyl)propionate], 4,4'-butylidene-bis(3-methyl-6-t-butylphenol), 1,6-hexanediol bis[3-(3,5-di-t-butyl-4-hydroxyphenyl)propionate, 2,4-bis-(n-octylthio)-6-(4-hydroxy-3,5-di-t-butylanilino)-1,3,5-triazine, pentaerythrityl tetrakis[3-(3,5-di-t-butyl-4-hydroxyphenyl)propionate], 2,2-thiodiethylene bis[3-(3,5-di-t-butyl-4-hydroxyphenyl)propionate], octadecyl-3-(3,5-di-t-butyl-4-hydroxyphenyl)propionate, 2,2-thiobis(4-methyl-6-t-butylphenol), N,N'-hexamethylenebis(3,5-di-t-butyl-4-hydroxy-hydroxycinnamamide), 3,5-di-t-butyl-4-hydroxybenzylphosphonate diethyl ester, 1,3,5-trimethyl-2,4,6-tris(3,5-di-butyl-4-hydroxybenzyl)benzene, calcium bis(ethyl 3,5-di-t-butyl-4-hydroxybenzyl sulfonate), tris-(3,5-di-t-butyl-4-hydroxybenzyl)isocyanurate, 2,6-di-t-butyl-p-cresol, butylated hydroxyanisole, 2,6-di-t-butyl-4-ethylphenol, stearyl β-(3,5-di-t-butyl-4-hydroxyphenyl)propionate, 2,2'-methylenebis-(4-methyl-6-t-butylphenol), 2,2'-methylenebis(4-ethyl-6-t-butylphenol), 4,4'-thiobis-(3-methyl-6-t-butylphenol), octylated diphenylamine, 2,4-bis[(octylthio)methyl]-O-cresol, isooctyl 3-(3,5-di-t-butyl-4-hydroxyphenyl)propionate, 4,4'-butylidenebis(3-methyl-6-t-butylphenol), 3,9-bis[1,1-dimethyl-2-[β-(3-t-butyl-4-hydorxy-5-methylphenyl)propionyloxy]ethyl]-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, bis[3,3'-bis(4'-hydroxy-3'-t-butylphenyl)butyric acid]glycol ester, 1,3,5-tris(3',5'-di-t-butyl-4'-hydroxybenzyl)-sec-triazine-2,4,6-(1H,3H,5H)trione, and d-α-tocopherol. These may be used singly or as a mixture thereof. Specific examples of commercial products of hindered phenol compounds include Irganox 1010 and Irganox 1098 (both trade names), manufactured by BASF.

Specific examples of the phosphorus-type antioxidant include organic phosphorus compounds such as triphenyl phosphite, trioctadecyl phosphite, tridecyl phosphite, trinonylphenyl phosphite, diphenylisodecyl phosphite, bis(2,6-di-tert-butyl-4-methylphenyl)pentaerythritol diphosphite, bis(2,4-di-tert-butylphenyl)pentaerythritol diphosphite, tris(2,4-di-tert-butylphenyl) phosphite, distearylpentaerythritol diphosphite, tetra(tridecyl-4,4'-isopropylidenediphenyl) diphosphite,

and 2,2-methylenebis(4,6-di-tert-butylphenyl)octyl phosphite. These may be used singly or as a mixture thereof.

The content of the antioxidant used is not particularly limited within a range not detracting from various types of performance of the composition. However, from the viewpoint of controlling the oxygen absorption performance and inhibiting the mechanical physical properties from worsening, the content is preferably from 0.001 to 3% by mass, and more preferably from 0.01 to 1% by mass, with respect to 100% by mass of the polyamide resin composition.

6. Method for Producing Polyamide Resin Composition

6-1. Method for Producing Polyamide Resin Composition of the First Invention

The polyamide resin composition of the first invention can be produced by mixing the polyamide resin (A) and the metal compound (C), and if necessary, the polyamide resin (B).

The polyamide resin (A), the polyamide resin (B), and the metal compound (C) may be mixed in a method known in the related art. Examples of the method include a method in which the polyamide resin (A), the polyamide resin (B), and the metal compound (C) are put into a mixing device such as a tumbler and a mixer, and mixed therein. In the case where the transition metal compound (C) is a solid or powder, there may be employed a method where a viscous liquid is deposited to the polyamide resin (A) or a mixture of the polyamide resin (A) and the polyamide resin (B) as a spreading agent and thereafter the metal compound (C) added to and mixed with the compound in order to prevent the classification after mixing. It is also possible to employ a method including dissolving the metal compound (C) in an organic solvent, mixing the resulting solution and the polyamide resin (A) or a mixture of the polyamide resin (A) and the polyamide resin (B), and thereafter or at the same time heating the mixture to remove the organic solvent, thereby adhering the metal compound to the polyamide. Further, in the case where the components are melt-kneaded by the use of an extruder, the metal compound (C) may be added to the extruder via a feeder different from that for the polyamide resin (A).

Furthermore, the polyamide resin composition of the first invention can also be produced according to a master batch method. As a specific method for producing the polyamide resin composition of the first invention, in the case where the polyamide resin composition of the first invention includes the polyamide resin (A), the polyamide resin (B), and the metal compound (C), preferred is a method including a step of melt-mixing the polyamide resin (B) and the metal compound (C) to obtain a master batch, and a step of melt-kneading the master batch with the polyamide resin (A). The step of obtaining the master batch may be a step of melt-mixing the polyamide resin (B), the metal compound (C), and the surfactant to obtain a master batch, and in this case, the amount of the surfactant to be added is preferably from 5 to 50 parts by mass with respect to 100 parts by mass of the metal compound (C).

Also in the case where the polyamide resin composition of the first invention does not include the polyamide resin (B), the polyamide resin composition of the first invention can be produced by a master batch method. In this case, as a method for producing the polyamide resin composition of the first invention, preferred is a method including a step of melt-mixing a part of the polyamide resin (A) and the metal compound (C) to obtain a master batch, and a step of melt-kneading the master batch with the rest of the polyamide resin (A).

The master batch method is preferably applied as a method for producing the polyamide resin composition of the first invention including the polyamide resin (A), the polyamide resin (B), and the metal compound (C). According to the master batch method, the metal compound (C) can be uniformly dispersed in the polyamide resin composition, and during the production of the polyamide resin composition, the polyamide resin (A) can be inhibited from oxidation deterioration by the reaction of the polyamide resin (A) with the metal compound (C).

The additive may be added to the polyamide resin (A) and/or the polyamide resin (B) in advance, or may be added during the production of the resin composition.

In the case of using the master batch, the mass ratio [(C)/(B)] of the metal compound (C) to the polyamide resin (B) is preferably from 10 to 5,000 ppm by mass, and more preferably from 50 to 4,000 ppm by mass, in terms of a metal atom concentration. When the metal atom concentration is 10 ppm by mass or more, the oxygen absorption performance of the obtained polyamide resin composition is sufficient. Further, when the metal concentration is 5,000 ppm by mass or less, the total amount of the metal compound (C) can be melt-mixed with the polyamide resin (B).

The polyamide resin (B) and the metal compound (C) can be mixed by employing a melt-kneading method using an extruder known in the related art. Further, the metal compound (C) may also be added to the extruder using a feeder other than that for the polyamide resin (B).

In addition, in the case of addition of additives or the like, the additives may be added by the same method as above.

Moreover, the proportion of the metal compound (C) to the total mass of the polyamide resin (A) and the master batch is preferably set to 10 to 5,000 ppm by mass, and more preferably from 50 to 1,000 ppm by mass, with respect to the total mass, as the metal atom concentration. When the metal atom concentration is 10 ppm by mass or more, the oxygen absorption performance, of the obtained resin composition is sufficient. In addition, when the metal concentration

is 5,000 ppm by mass or less, the oxidation degradation of the polyamide resin (A) is low, and thus, it is difficult to cause the melt viscosity during the molding to be reduced. In addition, the mixing ratio of the polyamide resin (A) to the master batch varies depending on the concentration of the master batch, but is preferably in a range of 99:1 to 70:30 as the mass ratio of the polyamide resin (A): the master batch, considering the oxygen barrier property and the oxygen absorption performance of the polyamide resin (A) itself.

6-2. Method for Producing Polyamide Resin Composition of the Second Invention

The polyamide resin composition of the second invention can be produced by mixing the polyamide resin (A) and the colorant (D).

The polyamide resin (A) and the colorant (D) can be mixed using a method known in the related art. Examples of the method include a method of putting the polyamide resin (A) and the colorant (D) into a mixing device such as a tumbler and a mixer, and mixing them. At this time, it is possible to employ a method in which a viscous liquid as a spreading agent is deposited to the polyamide resin (A) in order to prevent the classification after the mixing of the colorant (D), and then the colorant (D) is added thereto and mixed. It is also possible to employ a method in which the colorant (D) is dissolved in an organic solvent, this solution is mixed with the polyamide resin (A), and at the same time or thereafter, heating is performed to remove the organic solvent, followed by adhering to the polyamide. In the case of further melt-kneading using an extruder, it is also possible to added the colorant (D) using a feeder other than that for the polyamide resin (A).

Moreover, the polyamide resin composition of the second invention can also be produced according to the master batch method. As a specific method for producing the polyamide resin composition of the second invention, preferred is a method including a step of melt-mixing the colorant (D) and the thermoplastic resin (X) to obtain a master batch, and a step of melt-kneading the master batch with the polyamide resin (A). The step of obtaining the master batch may be a step of melt-mixing the colorant (D), the thermoplastic resin (X), and the surfactant to obtain a master batch, and in this case, the amount of the surfactant to be added is preferably from 5 to 50 parts by mass with respect to 100 parts by mass of the colorant (D).

As the thermoplastic resin (X), any resin such as a polyolefin, a polyester, and a polyamide can be used. From the viewpoint of moldability, a barrier property, or transparency, polyester is preferred, and polyethylene terephthalate is more preferred.

The polyamide resin composition of the second invention can also be produced according to a master batch method not using a thermoplastic resin (X). In this case, as a method for producing the polyamide resin composition of the second invention, preferred is a method including a step of melt-mixing a part of the polyamide resin (A) and the colorant (D) to obtain a master batch, and a step of melt-kneading the master batch with the rest of the polyamide resin (A).

According to the master batch method using the thermoplastic resin (X), the colorant (D) can be uniformly dispersed in the polyamide resin composition, and during the production of the polyamide resin composition, the polyamide resin (A) can be inhibited from oxidation deterioration by the reaction of the polyamide resin (A) with the colorant (D).

The additive may be added to the polyamide resin (A) and/or the thermoplastic resin (X) in advance, or may be added during the production of the resin composition.

In the case of using the master batch, the mass ratio [(B)/(X)] of the colorant (D) to the thermoplastic resin (X) is preferably from 10 to 15,000 ppm by mass, more preferably from 50 to 10,000 ppm by mass, and even more preferably from 100 to 5,000 ppm by mass, in terms of a metal atom concentration. When the metal atom concentration is 10 ppm by mass or more, the oxygen absorption performance of the obtained polyamide resin composition is sufficient. Further, when the metal concentration is 15,000 ppm by mass or less, the total amount of the colorant (D) can be melt-mixed with the thermoplastic resin (X).

The thermoplastic resin (X) and the colorant (D) can be mixed by employing a melt-kneading method using an extruder known in the related art. Further, the colorant (D) may also be added to the extruder using a feeder other than that for the thermoplastic resin (X).

In addition, in the case of addition of additives or the like, the additives may be added by the same method as above.

In addition, the mixing ratio of the polyamide resin (A) to the master batch varies depending on the concentration of the master batch, but is preferably in a range of 99:1 to 50:50 as the mass ratio of the polyamide resin (A): the master batch, considering the oxygen barrier property and the oxygen absorption performance of the polyamide resin (A) itself.

7. Use of Polyamide Resin Composition

The polyamide resin composition of the present invention may be applied to any purpose that requires an oxygen barrier property or an oxygen absorption performance. For example, the polyamide resin composition of the present invention may solely be charged in a sachet or the like and used as an oxygen absorbent.

Representative examples of the applications of polyamide resin composition of the present invention include a molded article, such as a packaging material and a packaging container, but are not limited thereto. The polyamide resin composition of the present invention may be used by processing into at least a part of a molded article. For example, the polyamide resin composition of the present invention may be used as at least a part of a packaging material in the shape of a film or a sheet, and may be used as at least a part of a packaging container such as a bottle, a tray, a cup, a tube, a flat bag, and various pouches, e.g., a standing pouch. The thickness of the layer formed of polyamide resin composition of the present invention is not particularly limited, and is preferably 1 μm or more.

The production method of a molded article such as a packaging material and a packaging container is not particularly limited, and an arbitrary method may be employed. For example, for molding a packaging material in the shape of a film or a sheet and a packaging material in the shape of a tube, they may be produced by melting the polyamide resin composition by passing through a T-die, a circular die, or the like, and extruding the molten material from an extruder attached to the device. The molded article in the shape of a film obtained by the aforementioned method may be stretched to produce a stretched film. A packaging container in the shape of a bottle may be obtained in such a manner that the molten polyamide resin composition is injected from an injection molding machine into a metal mold to produce a preform, which is then subjected to blow stretching under heating to a stretching temperature.

A container in the shape of a tray, a cup, or the like may be produced by a method of injecting the molten polyamide resin composition from an injection molding machine into a metal mold, or a method of molding the packaging material in the shape of a sheet by a molding method such as vacuum molding and pneumatic molding. The production method of the packaging material and the packaging container is not limited to the aforementioned methods, but they may be produced through various methods.

A molded article using the polyamide resin composition of the present invention may have a monolayer structure or a multilayer structure.

The molded article having a monolayer structure may be formed of only polyamide resin composition of the present invention, or a blend of the polyamide resin composition of the present invention and another resin.

In the case of the molded article having a multilayer structure, the layer configuration is not particularly limited, and the number or kind of the layers is not particularly limited. For example, in the case where a layer formed of polyamide resin composition of the present invention is taken as a layer (P) and the other resin layer is taken as a layer (Q), a P/Q configuration composed of one layer (P) and one layer (Q) may be used, or a Q/P/Q trilayer configuration composed of one layer (P) and two layers (Q) may also be used. In addition, a Q1/Q2/P/Q2/Q1 pentalayer configuration composed of one layer (P) and four layers (Q) of two kinds of the layer (Q1) and the layer (Q2) may also be used. Further, if necessary, an optional layer such as an adhesive layer (AD) may also be included, and for example, a Q1/AD/Q2/P/Q2/AD/Q1 heptalayer configuration may be used. In the case where the molded article of the present invention is a molded article having a multilayer structure, a colorant may be contained in the other resin layer (Q).

The molded article of the present invention has a metal atom concentration of preferably from 1 to 5,000 ppm by mass, more preferably from 1 to 2,000 ppm by mass, even more preferably from 3 to 1,000 ppm by mass, and particularly preferably from 5 to 500 ppm by mass.

The packaging container using the polyamide resin composition of the present invention is excellent in oxygen absorption performance and oxygen barrier performance, and is also excellent in a flavor retaining property for contents thereof, and it is suitable for packaging various articles.

Examples of the article to be stored include various articles, for example, beverages such as milk, milk products, juice, coffee, tea beverages, and alcohol beverages; liquid seasonings such as Worcester sauce, soy sauce, and dressing; cooked foods such as soup, stew, curry, infant cooked foods, and nursing care cooked foods; paste foods such as jam and mayonnaise; processed seafood such as tuna and other seafood; processed milk products such as cheese and butter; processed meat products such as meat, salami, sausage, and ham; vegetables such as carrot and potato; eggs; noodles; processed rice products such as uncooked rice, cooked rice, and rice porridge; dry foods such as powder seasonings, powder coffee, infant powder milk, powder diet foods, dried vegetables, and rice crackers; chemicals such as agrichemicals and insecticides; medical drugs; cosmetics; pet foods; sundry articles such as a shampoo, a conditioner, and a cleanser; semiconductor integrated circuits and electron devices; and various other articles.

Furthermore, before or after charging the article to be stored, the packaging container or the article to be stored may be subjected to sterilization in a form suitable for the article to be stored. Examples of the sterilization method include heat sterilization, such as a hydrothermal treatment at 100°C or lower, a pressurized hydrothermal treatment at 100°C or higher, and an ultrahigh temperature heat treatment at 130°C or higher; electromagnetic wave sterilization, such as an ultraviolet ray, a microwave, and a gamma wave; a gas treatment such as ethylene oxide; and chemical sterilization such as hydrogen peroxide and hypochlorous acid.

## EXAMPLES

The present invention will be described in more detail with reference to Examples below, but the present

invention is not limited to Examples.

In Examples below, with respect to the units constituting the copolymers,

a unit derived from m-xylylenediamine is referred to as "MXDA",
a unit derived from adipic acid is referred to as "AA",
a unit derived from isophthalic acid is referred to as "IPA", and
a unit derived from L-alanine is referred to as "L-Ala".

Furthermore, a unit derived from polymethaxylylene adipamide is referred to as "N-MXD6".

The polyamide resins obtained in Production Examples were measured for the α-amino acid content, the relative viscosity, the terminal amino group concentration, the glass transition temperature, and the melting point in the following manner. Further, films were prepared with the polyamide resins obtained in Production Examples and were measured for the oxygen absorbing amount in the following manner.

(1) α-Amino Acid Content

The α-amino acid content of the polyamide resin was quantitatively determined with $^1$H-NMR (400 MHz, production name: JNM-AL400, manufactured by JEOL, Ltd., measurement mode: NON ($^1$H)). Specifically, a 5% by mass solution of the polyamide resin was produced with formic acid-d as a solvent, and subjected to the $^1$H-NMR measurement.

(2) Relative Viscosity

1 g of a pellet sample was precisely weighed and dissolved in 100 mL of 96% sulfuric acid at 20°C to 30°C under stirring. After completely dissolved, 5 ml of the solution was quickly placed in a Cannon Fenske type viscometer, which was then allowed to stand in a thermostat chamber at 25°C for 10 minutes, and then the dropping time (t) was measured. Further, the dropping time ($t_0$) of 96% sulfuric acid was measured in the same manner. The relative viscosity was calculated from t and to according to the following expression.

$$\text{Relative viscosity} = t/t_0$$

(3) Terminal Amino Group Concentration [$NH_2$]

The polyamide resin was precisely weighed and dissolved in a solution of phenol/ethanol = 4/1 by volume at 20 to 30°C under stirring. After completely dissolved, under stirring, the inner wall of the container was washed out with 5 ml of methanol, and the solution was subjected to neutralization titration with a 0.01 mol/L hydrochloric acid aqueous solution, thereby measuring the terminal amino group concentration [$NH_2$].

(4) Glass Transition Temperature and Melting Point

DSC measurement (differential scanning calorimeter measurement) was performed with a differential scanning calorimeter (product name: DSC-60, manufactured by Shimadzu Corporation) at a temperature increasing rate of 10°C/min under a nitrogen stream, thereby measuring the glass transition temperature (Tg) and the melting point (Tm).

(5) Oxygen Absorbing Amount

The polyamide resin was molded into a non-stretched monolayer film having a thickness of about 100 μm with a twin screw extruder having a diameter of 30 mmϕ equipped with a T-die (manufactured by Research Laboratory of Plastics Technology Co., Ltd.) at a cylinder and T-die temperature of (melting point of the polyamide resin + 20°C).

Two sheets of specimens having a dimension of 10 cm × 10 cm cut out from the non-stretched monolayer film thus produced were charged in a bag formed of an aluminum foil laminated film sealed on three edges thereof having a dimension of 25 cm × 18 cm along with cotton impregnated with 10 mL of water, and the bag was sealed to make an air amount inside the bag 400 mL. The humidity in the bag was 100%RH (relative humidity). After storing at 40°C for 7 days, 14 days, and 28 days, the oxygen concentrations inside the bag each were measured with an oxygen concentration meter (product name: LC-700F, manufactured by Toray Engineering Co., Ltd.), and the oxygen absorbing amount was calculated from the oxygen concentration.

Production Example 1 (Production of Polyamide Resin 1)

In a pressure-resistant reaction vessel having an inner capacity of 50 L, equipped with a stirrer, a partial condenser, a total condenser, a pressure regulator, a thermometer, a dropping vessel, a pump, an aspirator, a nitrogen introducing tube, a flash valve, and a strand die, 13,000 g (88.96 mol) of precisely weighed adipic acid (manufactured by Asahi Kasei Chemicals Corporation), 880.56 g (9.88 mol) of L-alanine (Sinogel Amino Acid Co., Ltd.), 11.7 g (0.11 mol) of sodium hypophosphite, and 6.06 g (0.074 mol) of sodium acetate were placed, and after sufficiently replacing with nitrogen, the reaction vessel was sealed, and the system was heated to 170°C under stirring while maintaining the inside of the vessel to 0.4 MPa. After reaching 170°C, 12,082.2 g (88.71 mol) of m-xylylenediamine (manufactured by Mitsubishi Gas Chemical Co., Inc.) stored in the dropping vessel was added dropwise to the molten raw materials in the reaction vessel, and the inside of the reaction vessel was continuously heated to 240°C while maintaining the inside of the vessel to 0.4 MPa and removing condensation water formed. After completing the dropwise addition of m-xylylenediamine, the inside of the reaction vessel was gradually returned to atmospheric pressure, and then the inside of the reaction vessel was depressurized with the aspirator to 80 kPa for removing condensation water. The stirring torque of the stirrer was observed during the depressurization. At the time when the torque reached a predetermined value, the stirring was stopped, the inside of the reaction vessel was pressurized with nitrogen, the flash valve was opened, and the polymer was taken out from the strand die, and cooled and pelletized with a pelletizer. The pellets were charged in a stainless steel rotation drum heating apparatus, which was rotated at 5 rpm. After sufficiently substituting with nitrogen, and the inside of the reaction system was heated from room temperature to 140°C under a small amount of a nitrogen stream. At the time when the temperature inside the reaction system reached 140°C, the system was depressurized to 1 torr or less, and the temperature inside the system was increased to 180°C for 110 minutes. From the time when the temperature inside the system reached 180°C, the solid phase polymerization reaction was continued at that temperature for 180 minutes. After completing the reaction, depressurization was terminated, the temperature inside the system was decreased under a nitrogen stream, and at the time when the temperature reached 60°C, the pellets were taken out, thereby obtaining an MXDA/AA/L-Ala copolymer (polyamide resin 1). The charged composition of the monomers was m-xylylenediamine/adipic acid/L-alanine = 47.3/47.4/5.3 (% by mol).

Production Example 2 (Production of Polyamide Resin 2)

An MXDA/AA/L-Ala copolymer (polyamide resin 2) was obtained in the same manner as in Production Example 1 except that the charged composition of the respective monomers was changed to m-xylylenediamine/adipic acid/L-alanine = 44.4/44.5/11.1 (% by mol).

Production Example 3 (Production of Polyamide Resin 3)

An MXDA/AA/L-Ala copolymer (polyamide resin 3) was obtained in the same manner as in Production Example 1 except that the charged composition of the respective monomers was changed to m-xylylenediamine/adipic acid/L-alanine = 33.3:33.4:33.3 (% by mol).

Production Example 4 (Production of Polyamide Resin 4)

An MXDA/AA/IPA/L-Ala copolymer (polyamide resin 4) was obtained in the same manner as in Production Example 1 except that the dicarboxylic acid component was changed to a mixture of isophthalic acid (manufactured by A. G. International Chemical Co., Inc.) and adipic acid, and the charged composition of the respective monomers was changed to m-xylylenediamine:adipic acid:isophthalic acid:L-alanine = 44.3:39.0:5.6:11.1 (% by mol).

Production Example 5 (Production of Polyamide Resin 5)

An N-MXD6 (polyamide resin 5) was obtained in the same manner as in Production Example 1 except that L-alanine was not added and the charged composition of the respective monomers was changed to m-xylylenediamine:adipic acid = 49.8:50.2 (% by mol).

Table 1 shows the charged monomer composition of the polyamide resins 1 to 5, and the measurement results of the α-amino acid content, the relative viscosity, the terminal amino group concentration, the glass transition temperature, the melting point, and the oxygen absorbing amount of the polyamide resins obtained.

Table 1

| | | | Unit | Production Example 1 | Production Example 2 | Production Example 3 | Production Example 4 | Production Example 5 |
|---|---|---|---|---|---|---|---|---|
| Polyamide No. | | | | 1 | 2 | 3 | 4 | 5 |
| Charged monomer composition | Aromatic diamine | m-Xylylenediamine | mol% | 47.3 | 44.4 | 33.3 | 44.3 | 49.8 |
| | Aliphatic dicarboxylic acid | Adipic acid | mol% | 47.4 | 44.5 | 33.4 | 39.0 | 50.2 |
| | Aromatic dicarboxylic acid | Isophthalic acid | mol% | 0.0 | 0.0 | 0.0 | 5.6 | 0.0 |
| | α-Amino acid | L-Alanine | mol% | 5.3 | 11.1 | 33.3 | 11.1 | 0.0 |
| α-amino acid content | | | mol% | 5.3 | 11.0 | 33.1 | 11.1 | 0.0 |
| properties | Relative viscosity | | | 2.4 | 2.3 | 2.0 | 2.2 | 2.4 |
| | Terminal group concentration | $[NH_2]$ | μeq/g | 42 | 48 | 68 | 43 | 16 |
| | Thermal properties | Glass transition temperature Tg | °C | 86 | 84 | 81 | 90 | 87 |
| | | Melting point Tm | °C | 231 | 208 | N.D. | N.D. | 239 |
| | Oxygen absorbing amount | After storing for 7 days | cc/g | 7 | 9 | 10 | 5 | 0 |
| | | After storing for 14 days | cc/g | 15 | 18 | 21 | 11 | 0 |
| | | After storing for 28 days | cc/g | 26 | 30 | 35 | 18 | 0 |
| *N.D. = Not Detected | | | | | | | | |

MB Production Example 1-1 (Production of Master Batch 1-1)

Using the polyamide resin of Production Example 5 as a polyamide resin (B), a product formed by dry-blend with manganese acetate as the metal compound (C) such that the metal content was 4,000 ppm by mass with respect to the polyamide resin (B) was extruded in a double-screw extruder equipped with a $\phi$32 mm full flight screw after melt-mixing at a rotation speed of 80 rpm and 265°C into a strand shape, and then air-cooled and pelletized, thereby obtaining a master batch pellet having 4,000 ppm by mass of manganese acetate added thereto (master batch 1-1). Subsequently, the metal atoms contained in the obtained master batch 1-1 were quantitated in accordance with the following method. The results are shown in Table 2.

Quantitation of Metal Atoms

2 g of a sample was precisely weighed into a platinum crucible, pre-combusted, and then ashed in an electric furnace under the conditions of 800°C and 3 hours. After cooling, 2 ml of nitric acid was added in six divided portions, and completely evaporated and dried on a hot plate at 300 to 350°C. Next, 3 ml of hydrochloric acid was added, and the mixture was heated at 200 to 250°C, dried until the hydrochloric acid was left at the bottom of the crucible, diluted to 25 ml with distilled water, and kept at 20°C by a cooling device to prepare a sample. This sample was subjected to atomic absorption analysis by using an atomic absorption spectrophotometer (product name: AA-6500, manufactured by Shimadzu Corporation) and quantitation of metal atoms was carried out.

MB Production Example 1-2 (Production of Master Batch 1-2)

In the same manner as in MB Production Example 1-1 except that iron acetate was used as the metal compound (C), a master batch pellet having 4,000 ppm by mass of iron acetate added thereto was obtained (master batch 1-2). Further, in the same manner as in MB Production Example 1-1, quantitation of metal atoms contained in the obtained master batch 1-2 was carried out. The results are shown in Table 2.

MB Production Example 1-3 (Production of Master Batch 1-3)

In the same manner as in MB Production Example 1-1 except that cobalt stearate was used as the metal compound (C), a master batch pellet having 4,000 ppm by mass of cobalt stearate added thereto was obtained (master batch 1-3). Further, in the same manner as in MB Production Example 1-1, quantitation of metal atoms contained in the obtained master batch 1-3 was carried out. The results are shown in Table 2.

MB Production Example 1-4 (Production of Master Batch 1-4)

In the same manner as in MB Production Example 1-1 except that the polyamide resin of Production Example 1-1 was used as the polyamide resin (B), a master batch pellet having 4,000 ppm by mass of manganese acetate added thereto was obtained (master batch 1-4). Further, in the same manner as in MB Production Example 1-1, quantitation of metal atoms contained in the obtained master batch 1-4 was carried out. The results are shown in Table 2.

Table 2

| | | MB Production Example 1-1 | MB Production Example 1-2 | MB Production Example 1-3 | MB Production Example 1-4 |
|---|---|---|---|---|---|
| Polyamide No. | | 5 | 5 | 5 | 1 |
| Kind of metal compound | | manganese acetate | iron acetate | cobalt stearate | manganese acetate |
| Amount of metal compound (metal atom concentration) | ppm | 4000 | 4000 | 4000 | 4000 |
| Measured value of content of metal compound (metal atom concentration) | ppm | 3970 | 4037 | 4025 | 4013 |

MB Production Example 2-1 (Production of Master Batch 2-1)

Using the isophthalic acid copolymerization polyethylene terephthalate (PET) (grade name: BK2180, manufactured by Nippon UniPET Co., Ltd.) as the thermoplastic resin (X), a product formed by dry-blend with copper phthalocyanine-based blue colorant (product name: Heliogen Blue K7090, manufactured by BASF. copper content: 6.5%) as the colorant (D) such that the metal content was 4,000 ppm by mass with respect to PET was extruded in a double-screw extruder equipped with a ϕ32 mm full flight screw after melt-mixing at a rotation speed of 80 rpm and 265°C into a strand shape, and then air-cooled and pelletized, thereby obtaining a master batch pellet (master batch 2-1). Further, quantitation of the metal atoms contained in the obtained master batch 2-1 was carried out in the same manner as in MB Production Example 1-1. The results are shown in Table 3.

MB Production Example 2-2 (Production of Master Batch 2-2)

In the same manner as in MB Production Example 2-1 except that the polyamide resin 2 of Production Example 2 was used as the thermoplastic resin (X), a master batch pellet was obtained (master batch 2-2). Further, in the same manner as in MB Production Example 2-1, quantitation of the metal atoms contained in the obtained master batch 2-2 was carried out. The results are shown in Table 3.

MB Production Example 2-3 (Production of Master Batch 2-3)

In the same manner as in MB Production Example 2-1 except that the polyamide resin 5 of Production Example 5 was used as the thermoplastic resin (X), a master batch pellet was obtained (master batch 2-3). Further, in the same manner as in MB Production Example 2-1, quantitation of the metal atoms contained in the obtained master batch 2-3 was carried out. The results are shown in Table 3.

MB Production Example 2-4 (Production of Master Batch 2-4)

In the same manner as in MB Production Example 2-1 except that a copper phthalocyanine-based green colorant (product name: Heliogen Green K9360, manufactured by BASF, copper content: 2.85%) was used as the colorant (D), a master batch pellet was obtained (master batch 2-4). Further, in the same manner as in MB Production Example 2-1, quantitation of the metal atoms contained in the obtained master batch 2-4 was carried out. The results are shown in Table 3.

MB Production Example 2-5 (Production of Master Batch 2-5)

In the same manner as in MB Production Example 2-1 except that an iron (III) oxide-based red colorant (product name: Sicotrans Red K2915, manufactured by BASF, iron content: 51%) was used as the colorant (D), a master batch pellet was obtained (master batch 2-5). Further, in the same manner as in MB Production Example 2-1, quantitation of the metal atoms contained in the obtained master batch 2-5 was carried out. The results are shown in Table 3.

MB Production Example 2-6 (Production of Master Batch 2-6)

In the same manner as in MB Production Example 2-5 except that the polyamide resin 2 of Production Example 2 was used as the thermoplastic resin (X), a master batch pellet was obtained (master batch 2-6). Further, in the same manner as in MB Production Example 2-1, quantitation of the metal atoms contained in the obtained master batch 2-6 was carried out. The results are shown in Table 3.

MB Production Example 2-7 (Production of Master Batch 2-7)

In the same manner as in MB Production Example 2-1 except that an anthraquinone-based yellow colorant (product name: Filester Yellow RNB, manufactured by BASF, iron content: 1.8%) was used as the colorant (D), a master batch pellet was obtained (master batch 2-7). Further, in the same manner as in MB Production Example 2-1, quantitation of the metal atoms contained in the obtained master batch 2-7 was carried out. The results are shown in Table 3.

(Master Batch 2-8)

A PET base iron oxide-based brown colored master batch (product name: RX-2550-11 χ3, manufactured by Nippon Pigment Co., Ltd., iron content: 1.2%) was used as a master batch 2-8. In the same manner as in MB Production

Example 2-1, quantitation of the metal atoms contained in the obtained master batch 2-8 was carried out. The results are shown in Table 3.

(Master Batch 2-9)

A polybutylene terephthalate (PBT) base organocopper-based brown colored master batch (product name: Renol Brown, manufactured by Clariant, copper content: 0.95%) was used as a master batch 2-9. In the same manner as in MB Production Example 2-1, quantitation of the metal atoms contained in the obtained master batch 2-9 was carried out. The results are shown in Table 3.

Table 3

| Master batch | | 2-1 | 2-2 | 2-3 | 2-4 | 2-5 | 2-6 | 2-7 | 2-8 | 2-9 |
|---|---|---|---|---|---|---|---|---|---|---|
| Thermoplastic resin | | PET | Polyamide 2 | Polyamide 5 | PET | PET | Polyamide 2 | PET | PET | PBT |
| Kind of colorant | | Heliogen Blue K7090 | Heliogen Blue K7090 | Heliogen Blue K7090 | Heliogen Green K9360 | Sicotrans Red K2915 | Sicotrans Red K2915 | Filester Yellow RNB | RX-2550-11 $\chi 3$ | Renol Brown |
| Main kind of metal | | Cu/Pd | Cu/Pd | Cu/Pd | Cu | Fe/Pd | Fe/Pd | Fe | Fe | Cu |
| Main metal amount (measured value) of master batch | ppm | 260/878 | 260/878 | 260/878 | 114 | 2040/836 | 2040/836 | 72 | 12000 | 9500 |

Next, in Examples 1-1 to 1-16 and Comparative Examples 1-1 to 1-7, co-extruded multilayer films, PET multilayer bottles, and non-stretched films were prepared using the polyamide resins 1 to 5 and the master batches 1-1 to 1-3, and subjected to measurement of oxygen transmission rate, evaluation of interlayer delamination resistance, and a melt-retention test. Further, in Examples 2-1 to 2-37 and Comparative Examples 2-1 to 2-12, co-extruded multilayer films, PET blend bottles, PET multilayer bottles, and non-stretched films were prepared using the polyamide resins 1 to 5 and the master batches 2-1 to 2-9, and subjected to measurement of oxygen transmission rate, evaluation of interlayer delamination resistance, a melt-retention test, and a tensile test.
The measurement of oxygen transmission rate of the co-extruded multilayer film, the PET blend bottles, and the PET multilayer bottles obtained in Examples and Comparative Examples, the evaluation of interlayer delamination resistance of the PET multilayer bottles, and the melt-retention test and tensile test of the non-stretched films were carried out by the following methods.

(1) Oxygen Transmission Rate (OTR) of Co-Extruded Multilayer Film, PET Blend Bottle, and PET Multilayer Bottle

The oxygen transmission rate of the co-extruded multilayer film was measured using an oxygen transmission rate measurement device (Model: OX-TRAN2/21, manufactured by MOCON), in accordance with ASTM D3985 for 30 days in an atmosphere at 23°C and a relative humidity of 60%.
The oxygen transmission rate of the PET bottles obtained in Examples 1-8 to 1-11 and Comparative Examples 1-4 to 1-6 was measured using an oxygen transmission rate measurement device (product name: OX-TRAN 2-61, manufactured by MOCON) in accordance with ASTM D3985 in an atmosphere of 23°C, an outer relative humidity of 50% and an inner relative humidity of 100% in molded article, with the oxygen transmission rate of the bottle being measured for up to 30 days after the molding.
The oxygen transmission rate of the PET blend bottles and the PET multilayer bottles obtained in Examples 2-11 to 2-33 and Comparative Examples 2-6 to 2-9 was measured using an oxygen transmission rate measurement device (product name: OX-TRAN 2-61, manufactured by MOCON) in accordance with ASTM D3985 in an atmosphere of 23°C, an outer relative humidity of 50% and an inner relative humidity of 100% in molded article, with the oxygen transmission rate of the bottle being measured for up to 90 days after the molding.
A lower measured value indicates a better oxygen barrier property.

(2) Interlayer delamination Resistance of PET Multilayer Bottle

Based on ASTM D2463-95 Procedure B, the interlayer delamination height was measured by a fall test of the bottle. A higher interlayer delamination height indicates better interlayer delamination resistance.
First, a bottle was charged with water and capped, the bottle was then dropped, and the presence or absence of interlayer delamination was visually examined. The bottle was vertically dropped to bring the bottom thereof into contact with the floor. The dropping height gap was set to 15 cm and the number of the containers to be tested was set to 30. The test was carried out at 40°C and a relative humidity of 50%, immediately after charging water, and after a lapse of 30 days or 90 days after charging water.

(3) Melt Retention Test of Non-Stretched Film

Four sheets of non-stretched films having a thickness of 250 μm were overlapped and cut into circles having a diameter of about 40 mm, and then sandwiched between polytetrafluoroethylene sheets. The sheet was sandwiched between metal plates at the top and the bottom, and the metal plates were bolted to each other to fix the plates. Thereafter, the product was pressed by a heat press, which has been heated to 290°C, at a pressure of 50 kg/cm$^2$, and heated for 24 hours. After heating for 24 hours, the metal plates were removed and quenched, and the sample was then removed at room temperature.
Subsequently, 100 mg of this sample was weighed and then placed into a test tube that can be sealed. The sample was dried in a constant temperature dryer at 60°C for 30 minutes (the mass at this time is referred to a "sample mass"). After drying the sample, 10 ml of hexafluoroisopropanol (manufactured by Junsei Chemcial Co., Ltd., hereinafter referred to as "HFIP" in some cases) was instantly added to the test tube, capped, allowed to stand for 24 hours, and dissolved. Next, through a polytetrafluoroethylene-made membrane filter having a pore size of 0.3 μm as pre-weighed, the sample was vacuum-filtered under reduced pressure, and the residue remaining on the membrane filter was washed with HFIP. Thereafter, the filter having the residue adhered thereto was naturally dried for 24 hours. Subsequently, the total mass of the dried residue and the filter was weighed, and from the difference between the total mass and the mass of the membrane filter as pre-weighed, the HFIP-insoluble fraction amount (gel mass) of the retention sample was determined. Then, the gel fraction was calculated by the following equation as % by mass of the HFIP-insoluble fraction with respect to the retention sample before immersion in HFIP.

$$\text{Gel fraction (\%)} = (\text{gel mass/sample mass}) \times 100$$

(4) Tensile Test of Non-Stretched Film

A non-stretched film having a thickness of 100 μm was stored for 30 days in a constant-temperature bath at 40°C and 80%RH to be allowed to absorb oxygen, and to condition humidity in a constant-temperature and constant-humidity bath at 23°C and 50%RH for one week, and then subjected to a tensile test. As a comparison, a sample which had not been not stored for 30 days in an environment of 40°C and 80%RH was also prepared, allowed to condition humidity in a constant-temperature and constant-humidity bath at 23°C and 50%RH for one week, and then subjected to a tensile test (initial value).

Conditions for Tensile Test

Tensile tester: product name: Strograph V-1C, manufactured by Toyo Seiki Seisaku-sho, Ltd.
Film direction: MD
Film width: 10 mm
Tensile speed: 50 mm/min

[Co-Extruded Multilayer Film (Pentalayer Configuration)]

Example 1-1

A multilayer film production device equipped with three extruders, a feed block, a T-die, a cooling roll, a winder, and the like was used. A product obtained by dryblending a polyamide resin 1 and a master batch 1-1 at a mixing ratio (mass ratio) of the polyamide resin 1/the master batch 1-1 of 90/10 was extruded from the first extruder at 250°C; polypropylene (product name: NOVATEC, manufactured by Japan Polypropylene Corporation, grade: FY6) was extruded from the second extruder at 230°C; and an adhesive resin (product name: ADMER, manufactured by Mitsui Chemicals, Inc., grade: QB515) was extruded from the third extruder at 220°C. These were laminated through the feed block to produce a multilayer film having a 3-type pentalayer structure of (outer layer) polypropylene layer/adhesive resin layer/polyamide resin 1 and master batch 1-1 layer/adhesive resin layer/polypropylene layer (inner layer). Further, the thickness of each layer was set to 60/5/40/5/60 (μm).

Examples 1-2 to 1-7, and Comparative Examples 1-1 and 1-2

A co-extruded multilayer film was produced in the same manner as in Example 1-1, except that the kind of the polyamide resin (A), the kind of the master batch, and the mixing ratio of the polyamide resin (A) to the master batch were changed.

Comparative Example 1-3

A PET multilayer bottle was produced in the same manner as in Example 1-1, except that the materials constituting the polyamide resin 1 and master batch 1-1 layer was changed to the polyamide resin 1 alone while not mixing with the master batch in Example 1-1.

Table 4 shows the results of the measurement of the oxygen transmission rate after 5 days and 30 days after the production of the co-extruded multilayer films of Examples 1-1 to 1-7 and Comparative Examples 1-1 to 1-3.

Table 4

| | polyamide resin (A) | Master batch (MB) | (A)/(MB) mass ratio | Oxygen transmission rate (*1) (ml/0.21 atm·day·$m^2$) | |
|---|---|---|---|---|---|
| | | | | After 5 days | After 30 days |
| Example 1-1 | No. 1 | MB1-1 | 90/10 | 0.04 | 0.50 |
| Example 1-2 | No. 1 | MB1-1 | 95/5 | 0.03 | 0.43 |
| Example 1-3 | No. 1 | MB1-2 | 90/10 | 0.04 | 0.56 |
| Example 1-4 | No. 2 | MB1-1 | 90/10 | 0.03 | 0.32 |

(continued)

| | polyamide resin (A) | Master batch (MB) | (A)/(MB) mass ratio | Oxygen transmission rate (*1) (ml/0.21 atm·day·m$^2$) | |
|---|---|---|---|---|---|
| | | | | After 5 days | After 30 days |
| Example 1-5 | No. 3 | MB1-1 | 90/10 | 0.02 | 0.18 |
| Example 1-6 | No. 4 | MB1-1 | 90/10 | 0.02 | 0.12 |
| Example 1-7 | No. 1 | MB1-4 | 90/10 | 0.06 | 0.78 |
| Comparative Example 1-1 | No. 5 | MB1-3 | 90/10 | 0.02 | 3.78 |
| Comparative Example 1-2 | No. 5 | MB1-1 | 90/10 | 2.30 | 2.30 |
| Comparative Example 1-3 | No. 1 | None | --- | 0.05 | 1.50 |
| (*1) Value after 1 month for continued OTR measurement at 23°C and 50%RH | | | | | |

The co-extruded multilayer films of Examples 1-1 to 1-7 exhibited good oxygen transmission rate even after 30 days, as compared with Comparative Example 1-3 in which the master batch was not used and the metal compound was not added. Further, in Comparative Example 1-1 using a master batch in which cobalt stearate had been added to N-MXD6, the oxygen transmission rate on the fifth day was good, but the oxygen transmission rate after 30 days was drastically deteriorated due to the oxidation degradation of the film. In addition, in Comparative Example 1-2 using a master batch in which manganese acetate had been added to N-MXD6, the oxygen absorption action was not exhibited, and the oxygen transmission rate was not good.

[PET Multilayer Bottle (Trilayer Configuration)]

Example 1-8

Under the following conditions, a material constituting the layer (b) was injected from the injection cylinder, and then a material constituting the layer (a) was injected from another injection cylinder simultaneously with the material constituting the layer (b). Next, the material constituting the layer (b) was injected in a required amount to fill the cavity, thereby obtaining 22.5 g of an injection molded article (parison) having a trilayer structure (b)/(a)/(b).

As the material constituting the layer (b), polyethylene terephthalate (product name: BK-2180, manufactured by Japan Unipet Co., Ltd.) having an intrinsic viscosity of 0.83 (measured with a mixed solvent of phenol/tetrachloroethane = 6/4 (mass ratio), measurement temperature: 30°C) was used. For the material constituting the layer (a), the polyamide resin 2 and the master batch 1-1 were dry-blended at a mixing ratio (mass ratio) of the polyamide resin 2/the master batch 1-1 of 80/20.

After cooling the obtained parison, as the secondary processing, the parison was heated and subjected to biaxially stretching blow molding, thereby producing a bottle. The mass of the layer (a) was 5% by mass with respect to the total mass of the obtained bottle.

(Shape of Parison)

The parison had a total length of 95 mm, an outer diameter of 22 mm, a thickness of 2.7 mm, a thickness of the body of the outer layer (b) of 1,520 μm, a thickness of the body of the layer (a) of 140 μm, and a thickness of the body of the inner layer (b) of 1,040 μm. The parison was produced by using an injection molding machine (Model: M200, manufactured by Meiki Co., Ltd., four-cavity model).

(Molding Conditions of Parison)

Injection cylinder temperature for layer (a): 250°C
Injection cylinder temperature for layer (b): 280°C

Resin flow path temperature inside the mold: 280°C
Mold cooling water temperature: 15°C

(Shape of Bottle obtained by Secondary Processing)

The bottle had a total length of 160 mm, an outer diameter of 60 mm, an inner capacity of 370 mL, a thickness of 0.28 mm, a thickness of the body of the outer layer (b) of 152 μm, a thickness of the body of the layer (a) of 14 μm, and a thickness of the body of the inner layer (b) of 114 μm. The stretching ratio was 1.9 times for the longitudinal direction and 2.7 times for the transversal direction. The bottom shape was a champagne type bottom. The bottle had dimples on the body. Further, the secondary processing was performed by using a blow molding machine (Model: EFB1000ET, manufactured by Frontier, Inc.).

(Secondary Processing Conditions)

Heating temperature for injection molded article: 100°C
Pressure for stretching rod: 0.5 MPa
Primary blow pressure: 0.5 MPa
Secondary blow pressure: 2.4 MPa
Primary blow delay time: 0.32 sec
Primary blow time: 0.30 sec
Secondary blow time: 2.0 sec
Blow exhaust time: 0.6 sec
Mold temperature: 30°C

Examples 1-9 to 1-11, and Comparative Examples 1-4 and 1-5

A PET multilayer bottle was produced in the same manner as in Example 1-8 except that the kind of the polyamide resin (A), the kind of the master batch, and the mixing ratio of the polyamide resin (A) to the master batch were changed.

Comparative Example 1-6

A PET multilayer bottle was produced in the same manner as in Example 1-8, except that as the material constituting the layer (a), the polyamide resin 2 alone was used while not mixing with the master batch.

Table 5 shows the measurement results of the oxygen transmission rate and the interlayer delamination height of the PET multilayer bottles of Examples 1-8 to 1-11 and Comparative Examples 1-4 to 1-6.

Table 5

| | Polyamide resin (A) | Master batch (MB) | (A)/(MB) mass ratio | Oxygen transmission rate (*1) (ml/0.21 atm·day·bottle) | Interlayer Delamination height (*2) (cm) | |
|---|---|---|---|---|---|---|
| | | | | After 30 days | Immediately after charging | After 30 days |
| Example 1-8 | No. 2 | MB1-1 | 80/20 | 0.0007 | 270 | 230 |
| Example 1-9 | No. 2 | MB1-1 | 90/10 | 0.0002 | 265 | 220 |
| Example 1-10 | No. 2 | MB1-1 | 95/5 | 0.0001 | 265 | 220 |
| Example 1-11 | No. 1 | MB1-4 | 90/10 | 0.0008 | 265 | 230 |
| Comparative Example 1-4 | No. 5 | MB1-3 | 90/10 | 0.0001 | 260 | 30 |

(continued)

| | Polyamide resin (A) | Master batch (MB) | (A)/(MB) mass ratio | Oxygen transmission rate (*1) (ml/0.21 atm·day·bottle) | Interlayer Delamination height (*2) (cm) | |
|---|---|---|---|---|---|---|
| | | | | After 30 days | Immediately after charging | After 30 days |
| Comparative Example 1-5 | No. 5 | MB1-1 | 90/10 | 0.0090 | 270 | 180 |
| Comparative Example 1-6 | No. 2 | None | --- | 0.0010 | 275 | 240 |
| (*1) Value after 1 month for continued OTR measurement at 23°C and 50%RH<br>(*2) Interlayer delamination height after one-month storage at 40°C and 50%RH<br>The proportion of the barrier layer is 5%. | | | | | | |

The PET multilayer bottles of Examples 1-8 to 1-11 exhibited good oxygen transmission rate and interlayer delamination resistance, as compared with Comparative Example 1-6 in which the master batch was not used and the metal compound was not added. Further, in Comparative Example 1-4 using a master batch to which cobalt stearate had been added had good oxygen transmission rate, but the interlayer delamination resistance after 30-day storage at 40°C and 50%RH were remarkably deteriorated. On the other hand, in Comparative Example 1-5 having a master batch to which manganese acetate had been added applied to N-MXD6, the oxygen absorption action was not exhibited and the oxygen transmission rate was not good.

Example 1-12

The polyamide resin 1 and the master batch 1-1 were dry-blended at a mixing ratio (mass ratio) of the polyamide resin 1/the master batch 1-1 of 90/10. The resulting product was put into a hopper of a device including a single screw extruder having a diameter of 25 mm and a T die, and extruded at a rotation speed of 70 rpm and 260°C to obtain a non-stretched film having a thickness of 250 μm. The present film was subjected to a melt retention test at 290°C for 24 hours to determine a gel fraction.

Examples 1-13 to 1-16 and Comparative Example 1-7

The non-stretched films were respectively produced in the same manner as in Example 1-12 except that the kind of polyamide resin (A) or the kind of the master batch was changed, thereby determining a gel fraction.

Table 6 shows the measurement results of the obtained gel fractions of the non-stretched films obtained from the melt retention test of Examples 1-12 to 1-16, and Comparative Example 1-7.

Table 6

| | Polyamide resin (A) | Master batch (MB) | (A)/(MB) mass ratio | Gel fraction(*1) (%) |
|---|---|---|---|---|
| Example 1-12 | No. 1 | MB1-1 | 90/10 | 34 |
| Example 1-13 | No. 1 | MB1-2 | 90/10 | 25 |
| Example 1-14 | No. 2 | MB1-1 | 90/10 | 35 |
| Example 1-15 | No. 2 | MB1-1 | 80/20 | 41 |
| Example 1-16 | No. 1 | MB1-4 | 90/10 | 40 |
| Comparative Example 1-7 | No. 1 | MB1-3 | 90/10 | 76 |
| (*1) Gel fraction after melt-retention at 290°C for 24 days | | | | |

The gel fractions by the melt retention test of the non-stretched films of Examples 1-12 to 1-16 using the master batches having manganese acetate or iron acetate added thereto were low, as compared with Comparative Example 1-7 using a master batch having cobalt stearate added thereto, the gel production was inhibited, and thus, the heat resistance was excellent. From the present results, it can be seen that also in the cases where the molded articles of

Examples 1-1 to 1-11 were continuously produced, it is possible to reduce troubles in production, such as burning and gelling.

[Co-Extruded Multilayer Film (Pentalayer Configuration)]

Example 2-1

A multilayer film production device equipped with three extruders, a feed block, a T-die, a cooling roll, a winder, and the like was used. A product obtained by dry-blending a polyamide resin 1 and a master batch 2-2 at a mixing ratio (mass ratio) of the polyamide resin 1/the master batch 2-2 of 95/5 was extruded from the first extruder at 250°C; polypropylene (product name: NOVATEC, manufactured by Japan Polypropylene Corporation, grade: FY6) was extruded from the second extruder at 230°C; and an adhesive resin (product name: ADMER, manufactured by Mitsui Chemicals, Inc., grade: QB515) was extruded from the third extruder at 220°C. These were laminated through the feed block to produce a multilayer film having a 3-type pentalayer structure of (outer layer) polypropylene layer/adhesive resin layer/polyamide resin 1 and master batch 2-2 layer/adhesive resin layer/polypropylene layer (inner layer). Further, the thickness of each layer was set to 60/5/40/5/60 ($\mu$m).

Examples 2-2 to 2-7 and Comparative Example 2-1

A co-extruded multilayer film was produced in the same manner as in Example 2-1 except that the kind of the polyamide resin (A), the kind of the master batch, and the mixing ratio of the polyamide resin (A) to the master batch were changed.

Comparative Example 2-2

A co-extruded multilayer film was produced in the same manner as in Example 2-1 except that the material constituting the polyamide resin 1 and master batch 2-2 layer was changed to the polyamide resin 1 alone while not mixing the master batch in Example 2-1.

Comparative Example 2-3

A co-extruded multilayer film was produced in the same manner as in Example 2-1 except that the material constituting the polyamide resin 1 and master batch 2-2 layer was changed to the polyamide resin 5 alone while not mixing the master batch in Example 2-1.

[Co-Extruded Multilayer Film (Pentalayer Configuration, Biaxial Stretching)]

Example 2-8

The multilayer film obtained in Example 2-1 was stretched using a biaxial stretching device manufactured by Toyo Seiki Seisaku-sho, Ltd. (tenter method) at a stretching temperature of 115°C, to three times in the MD direction and to three times in the TD direction, and thermally fixed at 160°C for 30 seconds, thereby producing a biaxially stretched film having a thickness of about 19 $\mu$m.

Comparative Example 2-4

A biaxially stretched film was produced by stretching the multilayer film obtained in Comparative Example 2-3 in the same manner as in Example 2-8.

[Co-Extruded Multilayer Stretched Film (Trilayer Configuration, Biaxial Stretching)]

Example 2-9

Using a multilayer film production device equipped with three extruders, a feed block, a T-die, a cooling roll, a winder, and the like, nylon 6 (N6) (product name: UBE nylon 6, manufactured by Ube Industries, Ltd., grade: 1022B) was extruded from the first and the third extruders at 250°C; the polyamide resin 2 and the master batch 2-2 were extruded from the second extruder, respectively, at 250°C at a mixing ratio (mass ratio) of the polyamide resin 2/the master batch 2-2 of 90/10. Through the feed block, a multilayer film (A1) having a two-kind trilayer structure of nylon 6

layers/polyamide resin 2 layers/nylon 6 layers was produced. Further, the thickness of each layer was set to 80/80/80 (μm).

Subsequently, using a biaxial stretching machine in a batch mode (center stretching type biaxial stretching machine, manufactured by Toyo Seiki Co., Ltd.), a film which had been biaxially stretched at a heating temperature of 120°C, a stretching rate of 3,000 mm/min, a thermal fixing temperature of 190°C, and a thermal fixing time of 30 seconds, 4 times in the longitudinal direction and 4 times in the transverse direction was obtained. Further, the thickness of each layer after stretching was set to 5/5/5 (μm).

Example 2-10

A biaxially stretched film was produced in the same manner as in Example 2-9 except that the master batch 2-2 was changed to the master batch 2-6 in Example 2-9.

Comparative Example 2-5

A biaxially stretched film was produced in the same manner as in Example 2-9 except that the material constituting the polyamide resin 2 and master batch 2-2 layer was changed to the polyamide resin 2 alone while not mixing the master batch in Example 2-9.

Table 7 shows the measurement results of the oxygen transmission rate after 5 days and 30 days from the production of the co-extruded multilayer films of Examples 2-1 to 2-10 and Comparative Examples 2-1 to 2-5.

Table 7

| | Polyamide resin (A) | Master batch (MB) | (A)/(MB) mass ratio | Metal concentration in multilayer film | Oxygen transmission rate (*1) (ml/0.21 atm·day·m$^2$) | |
|---|---|---|---|---|---|---|
| | | | | ppm | After 5 days | After 30 days |
| (Pentalayer configuration) | | | | | | |
| Example 2-1 | No. | MB2-2 | 95/5 | 3 | 0.04 | 0.09 |
| Example 2-2 | No. 2 | MB2-2 | 95/5 | 3 | 0.04 | 0.07 |
| Example 2-3 | No. 2 | MB2-2 | 90/10 | 6 | 0.07 | 0.11 |
| Example 2-4 | No. 2 | MB2-3 | 95/5 | 3 | 0.07 | 0.09 |
| Example 2-5 | No. 2 | MB2-6 | 95/5 | 24 | 0.06 | 0.08 |
| Example 2-6 | No. 3 | MB2-6 | 95/5 | 24 | 0.02 | 0.05 |
| Example 2-7 | No. 4 | MB2-6 | 95/5 | 24 | 0.08 | 0.09 |
| Comparative Example 2-1 | No. 5 | MB2-3 | 95/5 | 3 | 2.30 | 2.30 |
| Comparative Example 2-2 | No. 1 | None | --- | --- | 0.05 | 1.50 |
| Comparative Example 2-3 | No. 5 | None | --- | --- | 18.10 | 18.10 |
| (Pentalayer configuration, biaxial stretching) | | | | | | |
| Example 2-8 | No. 1 | MB2-2 | 95/5 | 3 | 4.32 | 8.50 |
| Comparative Example 2-4 | No. 5 | None | --- | --- | 9.20 | 9.20 |
| (Trilayer configuration, biaxial stretching) | | | | | | |
| Example 2-9 | No. 2 | MB2-2 | 90/10 | 9 | 3.85 | 7.89 |
| Example 2-10 | No. 2 | MB2-6 | 90/10 | 68 | 3.93 | 7.77 |

(continued)

| | Polyamide resin (A) | Master batch (MB) | (A)/(MB) mass ratio | Metal concentration in multilayer film | Oxygen transmission rate (*1) (ml/0.21 atm·day·m$^2$) | |
|---|---|---|---|---|---|---|
| | | | | ppm | After 5 days | After 30 days |
| Comparative Example 2-5 | No. 2 | None | --- | --- | 3.89 | 8.11 |
| (*1) Value after 30 days for continued OTR measurement at 23°C and 60%RH | | | | | | |

The co-extruded multilayer films of Examples 2-1 to 2-7 kept the oxygen absorption performance even after 30 days, and exhibited good oxygen transmission rate. On the other hand, the co-extruded multilayer film of Comparative Example 2-2, in which the specific polyamide resin (A) was used, but the master batch was not used, exhibited good oxygen absorption performance after 5 days, which was, however, deteriorated over time, and thus, the oxygen absorption performance could not be kept for a long period of time. The co-extruded multilayer film of Comparative Example 2-3 employing N-MXD6 not using the specific polyamide resin as defined in the present invention or the co-extruded multilayer film of Comparative Example 2-1 having the master batch added to N-MXD6 did not exhibit oxygen absorption performance and had poor oxygen transmission rate.

In addition, the biaxially stretched multilayer film having a pentalayer configuration in Example 2-8 had good oxygen transmission rate for a long period of time, as compared with the biaxially stretched multilayer film using only N-MXD6 of Comparative Example 2-4. Similarly, the biaxially stretched multilayer films having trilayer configurations in Examples 2-9 and 2-10 had good oxygen transmission rate for a long period of time, as compared with the biaxially stretched multilayer film using only the polyamide resin (A) of Comparative Example 2-5.

[PET Blend Bottle]

Example 2-11

Under the following conditions, a resin composition formed by mixing the polyamide resin (A), the master batch 2-1, and the polyethylene terephthalate resin (PET) was injected from an injection cylinder in a required amount to fill the cavity, thereby obtaining 22.5 g of an injection molded article (parison). Further, as the polyethylene terephthalate resin, polyethylene terephthalate (product name: BK-2180, manufactured by Japan Unipet Co., Ltd.) having an intrinsic viscosity of 0.83 (measured with a mixed solvent of phenol/tetrachloroethane = 6/4 (mass ratio), measurement temperature: 30°C) was used. As the polyamide resin (A), the polyamide resin 2 produced in Production Example 2 was used, and as the master batch, the master batch 2-1 was used. Further, the blending ratio of PET to the master batch 2-1 was set to PET/master batch 2-1 = 90/10 (mass ratio). In addition, the blending ratio of the polyamide resin (A) was set to the polyamide resin (A)/(PET and the master batch) = 3/97 (mass ratio).

After cooling the obtained parison, as the secondary processing, the parison was heated and subjected to biaxially stretching blow molding, thereby producing a bottle.

(Shape of Parison)

The parison had a total length of 95 mm, an outer diameter of 22 mm, and a thickness of 2.7 mm. Further, the parison was produced by using an injection molding machine (Model: M200, manufactured by Meiki Co., Ltd., four-cavity model).

(Molding Conditions of Parison)

Injection cylinder temperature: 280°C
Resin flow path temperature inside the mold: 280°C
Mold cooling water temperature: 15°C

(Shape of Bottle obtained by Secondary Processing)

The bottle had a total length of 160 mm, an outer diameter of 60 mm, an inner capacity of 370 mL, and a thickness of 0.28 mm. The stretching ratio was 1.9 times for the longitudinal direction and 2.7 times for the transversal direction. The bottom shape was a champagne type bottom. The bottle had dimples on the body. Further, the secondary processing was performed by using a blow molding machine (Model: EFB1000ET, manufactured by Frontier, Inc.).

(Secondary Processing Conditions)

Heating temperature for injection molded article: 100°C
Pressure for stretching rod: 0.5 MPa
Primary blow pressure: 0.5 MPa
Secondary blow pressure: 2.4 MPa
Primary blow delay time: 0.32 sec
Primary blow time: 0.30 sec
Secondary blow time: 2.0 sec
Blow exhaust time: 0.6 sec
Mold temperature: 30°C

Examples 2-12 to 2-22 and Comparative Example 2-6

A PET blend bottle was produced in the same manner as in Example 2-11 except that the kind of the polyamide resin (A), the kind of the master batch, the blending ratio of PET to the master batch, and the blending ratio of the polyamide resin (A) were changed.

Comparative Example 2-7

A PET blend bottle was produced in the same manner as in Example 2-11 except that as the material constituting the parison, the polyamide resin 2 alone was used while not mixing with the master batch.

Table 8 shows the measurement results of the oxygen transmission rate of the PET blend bottles of Examples 2-11 to 2-22, and Comparative Examples 2-6 and 2-7.

Table 8

| | Polyamide resin (A) | Master batch (MB) | Blending ratio of polyamide resin(A) | (PET)/(MB) mass ratio | Metal concentration in blend bottle | Oxygen transmission rate (*1) (ml/0.21 atm·dar·bottle) | |
|---|---|---|---|---|---|---|---|
| | | | % by mass | | ppm | After 5 days | After 90 days |
| Example 2-11 | No. 2 | MB2-1 | 3 | 90/10 | 25.2 | 0.003 | 0.011 |
| Example 2-12 | No. 2 | MB2-1 | 3 | 80/20 | 50.4 | 0.002 | 0.009 |
| Example 2-13 | No. 2 | MB2-1 | 5 | 90/10 | 24.7 | 0.001 | 0.011 |
| Example 2-14 | No. 2 | MB2-1 | 10 | 90/10 | 23.4 | 0.001 | 0.010 |
| Example 2-15 | No. 2 | MB2-5 | 10 | 90/10 | 183.6 | 0.001 | 0.008 |
| Example 2-16 | No. 2 | MB2-2 | 5 | 90/10 | 12.4 | 0.001 | 0.010 |

(continued)

| | Polyamide resin (A) | Master batch (MB) | Blending ratio of polyamide resin(A) | (PET)/(MB) mass ratio | Metal concentration in blend bottle | Oxygen transmission rate (*1) (ml/0.21 atm·dar·bottle) | |
|---|---|---|---|---|---|---|---|
| | | | % by mass | | ppm | After 5 days | After 90 days |
| Example 2-17 | No. 1 | MB2-5 | 5 | 90/10 | 193.8 | 0.001 | 0.014 |
| Example 2-18 | No. 3 | MB2-5 | 5 | 90/10 | 193.8 | 0.001 | 0.007 |
| Example 2-19 | No. 4 | MB2-5 | 5 | 90/10 | 193.8 | 0.001 | 0.012 |
| Example 2-20 | No. 2 | MB2-7 | 5 | 80/20 | 13.7 | 0.001 | 0.012 |
| Example 2-21 | No. 2 | MB2-8 | 5 | 90/10 | 1140 | 0.001 | 0.014 |
| Example 2-22 | No. 2 | MB2-9 | 5 | 90/10 | 902.5 | 0.001 | 0.014 |
| Comparative Example 2-6 | No. 5 | MB2-1 | 5 | 90/10 | 24.7 | 0.029 | 0.029 |
| Comparative Example 2-7 | No. 2 | None | 5 | --- | --- | 0.001 | 0.031 |
| (*1) Value after 90 days for continued OTR measurement in a molded article at 23°C with an outer relative humidity of 50% and an inner relative humidity of 100% | | | | | | | |

The PET blend bottles of Examples 2-11 to 2-22 exhibited good oxygen transmission rate for a long period of time, as compared with the PET blend bottle of Comparative Example 2-6 having a master batch added to N-MXD6 or the PET blend bottle of Comparative Example 2-7 not using a master batch.

[PET Multilayer Bottle (Trilayer Configuration)]

Example 2-23

Under the following conditions, a material constituting the layer (b) was injected from the injection cylinder, and then a material constituting the layer (a) was injected from another injection cylinder simultaneously with the material constituting the layer (b). Next, the material constituting the layer (b) was injected in a required amount to fill the cavity, thereby obtaining 22.5 g of an injection molded article (parison) having a trilayer structure (b)/(a)/(b).

As the material constituting the layer (b), polyethylene terephthalate (product name: BK-2180, manufactured by Japan Unipet Co., Ltd.) having an intrinsic viscosity of 0.83 (measured with a mixed solvent of phenol/tetrachloroethane = 6/4 (mass ratio), measurement temperature: 30°C) was used. For the material constituting the layer (a), the polyamide resin 1 and the master batch 2-6 were dry-blended at a mixing ratio (mass ratio) of the polyamide resin 1/the master batch 2-6 of 90/10.

After cooling the obtained parison, as the secondary processing, the parison was heated and subjected to biaxially stretching blow molding, thereby producing a bottle. The mass of the layer (a) was 5% by mass with respect to the total mass of the obtained bottle.

(Shape of Parison)

The parison had a total length of 95 mm, an outer diameter of 22 mm, a thickness of 2.7 mm, a thickness of the body of the outer layer (b) of 1,520 μm, a thickness of the body of the layer (a) of 140 μm, and a thickness of the body of the inner layer (b) of 1,040 μm. The parison was produced by using an injection molding machine (Model: M200, manufactured by Meiki Co., Ltd., four-cavity model).

(Molding Conditions of Parison)

Injection cylinder temperature for layer (a): 250°C
Injection cylinder temperature for layer (b): 280°C
Resin flow path temperature inside the mold: 280°C
Mold cooling water temperature: 15°C

(Shape of Bottle obtained by Secondary Processing)

The bottle had a total length of 160 mm, an outer diameter of 60 mm, an inner capacity of 370 mL, a thickness of 0.28 mm, a thickness of the body of the outer layer (b) of 152 μm, a thickness of the body of the layer (a) of 14 μm, and a thickness of the body of the inner layer (b) of 114 μm. The stretching ratio was 1.9 times for the longitudinal direction and 2.7 times for the transversal direction. The bottom shape was a champagne type bottom. The bottle had dimples on the body. Further, the secondary processing was performed by using a blow molding machine (Model: EFB1000ET, manufactured by Frontier, Inc.).

(Secondary Processing Conditions)

Heating temperature for injection molded article: 100°C
Pressure for stretching rod: 0.5 MPa
Primary blow pressure: 0.5 MPa
Secondary blow pressure: 2.4 MPa
Primary blow delay time: 0.32 sec
Primary blow time: 0.30 sec
Secondary blow time: 2.0 sec
Blow exhaust time: 0.6 sec
Mold temperature: 30°C

Examples 2-24 to 2-32 and Comparative Example 2-8

A PET multilayer bottle was produced in the same manner as in Example 2-23 except that the kind of the polyamide resin (A), the kind of the master batch, the mixing ratio of the polyamide resin (A) to the master batch, and the mass of the layer (a) with respect to the total mass of the bottle were changed.

Example 2-33

A PET multilayer bottle was produced in the same manner as in Example 2-23 except that as the material constituting the layer (b), one formed by dry-blending at a mixing ratio (mass ratio) of PET/master batch 2-6 of 90/10 was used.

Comparative Example 2-9

A PET multilayer bottle was produced in the same manner as in Example 2-23 except that as the material constituting the layer (a), the polyamide resin 2 alone was used while not mixing the master batch.
Table 9 shows the measurement results of the oxygen transmission rate and the interlayer delamination height of the PET multilayer bottles of Examples 2-23 to 2-33 and Comparative Examples 2-8 and 2-9.

Table 9

| | Polyamide resin (A) | Master batch (MB) | (A)/(MB) mass ratio mass | Mass of layer (a) to the total mass of bottle | Metal concentration in PET multilayer bottle | Oxygen transmission rate (*1) (ml/0.21 atm·day·bottle) | | Interlayer delamination height (*2) (cm) | |
|---|---|---|---|---|---|---|---|---|---|
| | | | | % by mass | ppm | After 5 days | After 90 days | Immediately after charging | After 90 days |
| Example 2-23 | No. 1 | MB2-6 | 90/10 | 5 | 10 | 0.0004 | 0.0050 | 270 | 230 |
| Example 2-24 | No. 2 | MB2-6 | 90/10 | 5 | 10 | 0.0004 | 0.0040 | 265 | 230 |
| Example 2-25 | No. 3 | MB2-6 | 90/10 | 5 | 10 | 0.0002 | 0.0070 | 280 | 245 |
| Example 2-26 | No. 4 | MB2-6 | 90/10 | 5 | 10 | 0.0001 | 0.0008 | 270 | 250 |
| Example 2-27 | No. 2 | MB2-1 | 90/10 | 5 | 1.3 | 0.0006 | 0.0070 | 270 | 230 |
| Example 2-28 | No. 2 | MB2-3 | 90/10 | 5 | 1.3 | 0.0005 | 0.0040 | 270 | 225 |
| Example 2-29 | No. 2 | MB2-5 | 90/10 | 5 | 10 | 0.0009 | 0.0050 | 270 | 230 |
| Example 2-30 | No. 2 | MB2-6 | 80/20 | 5 | 20 | 0.0007 | 0.0070 | 280 | 250 |
| Example 2-31 | No. 2 | MB2-6 | 90/10 | 10 | 20 | 0.0001 | 0.0009 | 270 | 210 |
| Example 2-32 | No. 2 | MB2-6 | 90/10 | 3 | 6 | 0.0007 | 0.0070 | 270 | 250 |
| Example 2-33 (*3) | No. 2 | MB2-6 | 90/10 | 5 | 204 | 0.0004 | 0.0050 | 270 | 240 |
| Comparative Example 2-8 | No. 5 | MB2-3 | 90/10 | 5 | 1.3 | 0.0100 | 0.0100 | 270 | 230 |
| Comparative Example 2-9 | No. 2 | None | --- | 5 | --- | 0.0008 | 0.0100 | 275 | 230 |

(*1) Value after 90 days for continued OTR measurement in a molded article at 23°C with an outer relative humidity of 50% and an inner relative humidity of 100%
(*2) Interlayer delamination height after 90-day storage at 40°C and 50%RH
(*3) As the material constituting the layer (b), one formed by dry-blending at a mixing ratio (mass ratio) of PET/MB6 of 90/10 was used.

The PET multilayer bottles of Examples 2-23 to 2-33 exhibited good oxygen transmission rate, as compared with the PET multilayer bottle of Comparative Example 2-8 using the N-MXD6-based master batch in N-MXD6; and the PET multilayer bottle of Comparative Example 2-9 using no master batch without addition of a colorant. Further, with regard to interlayer delamination resistance, the PET multilayer bottles of Examples 2-23 to 2-33 exhibited the performance equivalent to Comparative Examples 2-8 and 2-9.

Example 2-34

The polyamide resin 2 and the master batch 2-2 were dry-blended at a mixing ratio (mass ratio) of the polyamide resin 2/the master batch 2-2 of 90/10. The resulting product was put into a hopper of a device including a single screw extruder having a diameter of 25 mm and a T die, and extruded at a rotation speed of 70 rpm and 260°C to obtain non-stretched films having a thickness of 250 μm and a thickness of 100 μm. The 250 μm film was subjected to a melt retention test at 290°C for 24 hours to determine a gel fraction. Further, using the 100 μm film, a tensile test was carried out to determine the tensile breaking strength.

Examples 2-35 to 2-37, and Comparative Example 2-10

The non-stretched films were produced in the same manner as in Example 2-34 except that the kind of the polyamide resin (A), the kind of the master batch, and the mixing ratio of the polyamide resin (A) to the master batch were changed, and subjected to a melt retention test and a tensile test, thereby determining a gel fraction and tensile breaking strength.
Table 10 shows the measurement results of the gel fractions obtained from the melt retention test and of the tensile breaking strength obtained from the tensile test of the non-stretched films of Examples 2-34 to 2-37, and Comparative Example 2-10.

Table 10

| | Polyamide resin (A) | Master batch (MB) | (A)/(MB) mass ratio | Metal concentration in film | Gel fraction (*1) (%) | Tensile breaking strength (MPa) | |
|---|---|---|---|---|---|---|---|
| | | | | ppm | | Start | After 30 days at 40°C |
| Example 2-34 | No. 2 | MB2-2 | 90/10 | 26 | 34 | 79 | 71 |
| Example 2-35 | No. 2 | MB2-3 | 90/10 | 26 | 28 | 78 | 74 |
| Example 2-36 | No. 2 | MB2-6 | 90/10 | 204 | 35 | 81 | 75 |
| Example 2-37 | No. 2 | MB2-6 | 80/20 | 204 | 35 | 83 | 73 |
| Comparative Example 2-10 | No. 2 | None | --- | --- | 36 | 82 | 73 |
| (*1) Gel fraction after melt-retention at 290°C for 24 days with a heat press | | | | | | | |

It can be seen that the gel fractions obtained from the melt retention test and the tensile breaking strength obtained from the tensile test of the non-stretched films of Examples 2-34 to 2-37 using a master batch were equivalent to Comparative Example 2-10 without addition of a master batch, the gel production is inhibited, and the heat resistance was excellent. Further, from the viewpoint that reduction in the mechanical properties worsens, it can be seen that the films are distributed in the form of actual packaging container, which does not cause a practical problem even with oxygen absorption. From the present results, it can be seen that also in the cases where the molded articles of Examples 2-1 to 2-33 were continuously produced, it is possible to reduce troubles in production, such as burning and gelling, and it is also possible to decrease the reduction in the mechanical properties (for example, interlayer delamination resistance) caused by oxygen absorption.

INDUSTRIAL APPLICABILITY

The polyamide resin composition of the present invention is excellent in oxygen absorption. Therefore, for example, the polyamide resin composition of the present invention is suitably used as an oxygen absorbent by charging

it in a sachet. Examples of the suitable use form with the polyamide resin composition of the present invention include uses in packaging materials or packaging containers. The packaging materials or packaging containers using the polyamide resin composition of the present invention express excellent oxygen absorption performance, and thus, the contents can be stored in a good state.

## Claims

1. A polyamide resin composition comprising a polyamide resin (A) and a metal compound (C) containing at least one metal atom selected from iron, manganese, copper, and zinc,
wherein the polyamide resin (A) comprises:

from 25 to 50% by mol of a diamine unit, which contains at least one diamine unit selected from the group consisting of an aromatic diamine unit represented by the following general formula (1-1), an alicyclic diamine unit represented by the following general formula (I-2), and a linear aliphatic diamine unit represented by the following general formula (I-3), in an amount in total of 50% by mol or more,
from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more, and
from 0.1 to 50% by mol of a constitutional unit represented by the following general formula (III):

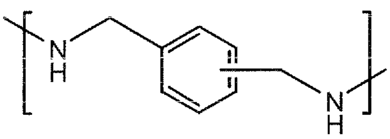
(I-1)

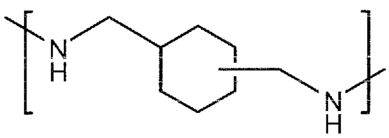
(I-2)

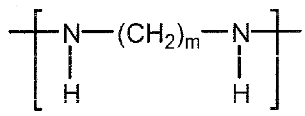
(I-3)

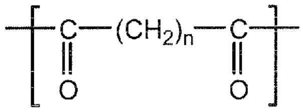
(II-1)

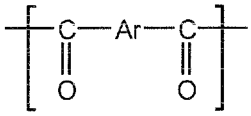
(II-2)

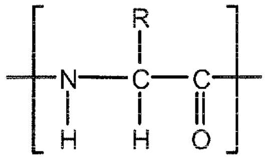
(III)

wherein,
in the general formula (I-3), m represents an integer of from 2 to 18;
in the general formula (II-1), n represents an integer of from 2 to 18;
in the general formula (II-2), Ar represents an arylene group; and
in the general formula (III), R represents a substituted or unsubstituted alkyl group or a substituted or unsubstituted aryl group.

2. The polyamide resin composition according to claim 1, wherein R in the general formula (III) represents a substituted or unsubstituted alkyl group having from 1 to 6 carbon atoms or a substituted or unsubstituted aryl group having from 6 to 10 carbon atoms.

3. The polyamide resin composition according to claim 1 or 2, wherein the diamine unit includes m-xylylenediamine units in an amount of 50% by mol or more.

4. The polyamide resin composition according to any one of claims 1 to 3, wherein the linear aliphatic dicarboxylic acid unit includes at least one selected from the group consisting of an adipic acid unit, a sebacic acid unit, and a 1,12-dodecanedicarboxylic acid unit, in an amount in total of 50% by mol or more.

5. The polyamide resin composition according to any one of claims 1 to 4, wherein the aromatic dicarboxylic acid unit includes at least one selected from the group consisting of an isophthalic acid unit, a terephthalic acid unit, and a

2,6-naphthalenedicarboxylic acid unit, in an amount in total of 50% by mol or more.

**6.** The polyamide resin composition according to any one of claims 1 to 5, wherein the polyamide resin (A) further contains a ω-aminocarboxylic acid unit represented by the following general formula (VI) in an amount of from 0.1 to 49.9% by mol in all the constitutional units of the polyamide resin (A):

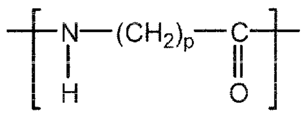

(VI)

wherein, in the general formula (VI), p represents an integer of from 2 to 18.

**7.** The polyamide resin composition according to claim 6, wherein the ω-aminocarboxylic acid unit includes a 6-aminohexanoic acid unit and/or a 12-aminododecanoic acid unit in an amount in total of 50% by mol or more.

**8.** The polyamide resin composition according to any one of claims 1 to 7, wherein the relative viscosity of the polyamide resin (A) is from 1.8 to 4.2.

**9.** The polyamide resin composition according to any one of claims 1 to 8, wherein the metal compound (C) is at least one selected from carboxylates, carbonates, acetylacetonate complexes, oxides, and halides, containing at least one metal atom selected from iron, manganese, copper, and zinc.

**10.** The polyamide resin composition according to any one of claims 1 to 9, further comprising a polyamide resin (B) different from the polyamide resin (A).

**11.** The polyamide resin composition according to claim 10, wherein the polyamide resin (B) is a polyamide resin obtained by the polycondensation of a diamine component containing 70% by mol or more of m-xylylenediamine with a dicarboxylic acid component containing 50% by mol or more of adipic acid.

**12.** A method for producing the polyamide resin composition according to claim 10 or 11, comprising a step of:

melt-mixing the polyamide resin (B) and the metal compound (C) to obtain a master batch; and
melt-kneading the master batch with the polyamide resin (A).

**13.** The method for producing the polyamide resin composition according to claim 12, wherein the mass ratio [(C)/(B)] of the metal compound (C) to the polyamide resin (B) is from 10 to 5,000 ppm by mass, in terms of a metal atom concentration.

**14.** The method for producing the polyamide resin composition according to claim 12 or 13, wherein the mixing ratio of the polyamide resin (A) to the master batch is from 99:1 to 70:30 as a mass ratio of the polyamide resin (A):the master batch.

**15.** A molded article containing the polyamide resin composition according to any one of claims 1 to 11.

**16.** A polyamide resin composition comprising a polyamide resin (A) and a colorant (D) containing at least one metal atom selected from iron, manganese, copper, and zinc, wherein the polyamide resin (A) comprises:

from 25 to 50% by mol of a diamine unit, which contains at least one diamine unit selected from the group consisting of an aromatic diamine unit represented by the following general formula (I-1), an alicyclic diamine unit represented by the following general formula (1-2), and a linear aliphatic diamine unit represented by the following general formula (I-3), in an amount in total of 50% by mol or more,
from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more, and

from 0.1 to 50% by mol of a constitutional unit represented by the following general formula (III):

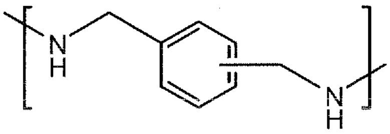
(I-1)

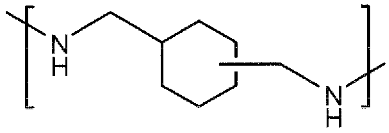
(I-2)

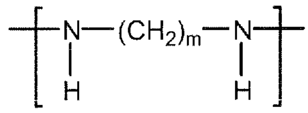
(I-3)

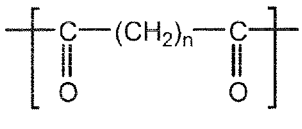
(II-1)

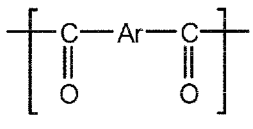
(II-2)

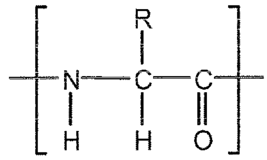
(III)

wherein,
in the general formula (I-3), m represents an integer of from 2 to 18;
in the general formula (II-1), n represents an integer of from 2 to 18;
in the general formula (II-2), Ar represents an arylene group; and
in the general formula (III), R represents a substituted or unsubstituted alkyl group or a substituted or unsubstituted aryl group.

**17.** The polyamide resin composition according to claim 16, wherein R in the general formula (III) represents a substituted or unsubstituted alkyl group having from 1 to 6 carbon atoms or a substituted or unsubstituted aryl group having from 6 to 10 carbon atoms.

**18.** The polyamide resin composition according to claim 16 or 17, wherein the colorant (D) is contained in an amount of from 1 to 5,000 ppm by mass in terms of a metal atom concentration.

**19.** The polyamide resin composition according to any one of claims 16 to 18, wherein the diamine unit includes m-xylylenediamine units in an amount of 50% by mol or more.

**20.** The polyamide resin composition according to any one of claims 16 to 19, wherein the linear aliphatic dicarboxylic acid unit includes at least one selected from the group consisting of an adipic acid unit, a sebacic acid unit, and a 1,12-dodecanedicarboxylic acid unit, in an amount in total of 50% by mol or more.

**21.** The polyamide resin composition according to any one of claims 16 to 20, wherein the aromatic dicarboxylic acid unit includes at least one selected from the group consisting of an isophthalic acid unit, a terephthalic acid unit, and a 2,6-naphthalenedicarboxylic acid unit, in an amount in total of 50% by mol or more.

**22.** The polyamide resin composition according to any one of claims 16 to 21, wherein the polyamide resin (A) further contains a ω-aminocarboxylic acid unit represented by the following general formula (VI) in an amount of from 0.1 to 49.9% by mol, in all the constitutional units of the polyamide resin (A):

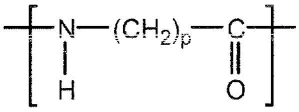
(VI)

wherein, in the general formula (VI), p represents an integer of from 2 to 18.

**23.** The polyamide resin composition according to claim 22, wherein the ω-aminocarboxylic acid unit includes a 6-aminohexanoic acid unit and/or a 12-aminododecanoic acid unit in an amount in total of 50% by mol or more.

**24.** The polyamide resin composition according to any one of claims 16 to 23, wherein the relative viscosity of the polyamide resin (A) is from 1.8 to 4.2.

**25.** The polyamide resin composition according to any one of claims 16 to 24, wherein the colorant (D) is at least one colorant selected from an oxide or cyanide containing at least one metal atom selected from iron, manganese, copper, and zinc, an anthracene-based colorant containing at least one metal atom selected from iron, manganese, copper, and zinc, and a copper phthalocyanine-based colorant.

**26.** The polyamide resin composition according to any one of claims 16 to 25,
wherein the colorant (D) is at least one selected from an iron oxide-based colorant, a ferrocyanide-based colorant, and a copper phthalocyanine-based colorant.

**27.** A method for producing the polyamide resin composition according to any one of claims 16 to 26, comprising a step of:

melt-mixing the colorant (D) and a thermoplastic resin (X) to obtain a master batch; and
melt-kneading the master batch with the polyamide resin (A).

**28.** The method for producing the polyamide resin composition according to claim 27, wherein the mass ratio [(B)/(X)] of the colorant (D) to the thermoplastic resin (X) is from 10 to 15,000 ppm by mass in terms of a metal atom concentration.

**29.** The method for producing the polyamide resin composition according to claim 27 or 28, wherein the mixing ratio of the polyamide resin (A) to the master batch is from 99:1 to 50:50 as a mass ratio of the polyamide resin (A):the master batch.

**30.** A molded article containing the polyamide resin composition according to any one of claims 16 to 29.

**31.** The molded article according to claim 30, wherein the metal atom concentration is from 1 to 5,000 ppm by mass.

## INTERNATIONAL SEARCH REPORT

International application No. PCT/JP2013/072786

A. CLASSIFICATION OF SUBJECT MATTER
*C08L77/00*(2006.01)i, *C08G69/36*(2006.01)i, *C08J3/22*(2006.01)i, *C08K3/00*(2006.01)i, *C08K5/098*(2006.01)i

According to International Patent Classification (IPC) or to both national classification and IPC

B. FIELDS SEARCHED

Minimum documentation searched (classification system followed by classification symbols)
C08L77/00-77/12, C08G69/00-69/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2012/090797 A1 (Mitsubishi Gas Chemical Co., Inc.), 05 July 2012 (05.07.2012), claims; paragraphs [0063], [0102] & AU 2011351048 A & TW 201231554 A | 1-24,27-31<br>1-31 |
| Y<br>A | JP 2004-250542 A (Mitsubishi Gas Chemical Co., Inc.), 09 September 2004 (09.09.2004), claim 1; paragraphs [0014], [0015], [0022] (Family: none) | 1-24,27-31<br>25,26 |
| Y<br>A | JP 2001-226585 A (Mitsubishi Gas Chemical Co., Inc.), 21 August 2001 (21.08.2001), claims 1, 4; paragraph [0011]; examples (Family: none) | 1-24,27-31<br>25,26 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 September, 2013 (12.09.13) | 24 September, 2013 (24.09.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2013/072786

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2011/081099 A1 (Mitsubishi Gas Chemical Co., Inc.), 07 July 2011 (07.07.2011), claims; examples & US 2012/0302723 A1 & EP 2520604 A1 & AU 2010337546 A & CA 2785673 A & MX 2012006869 A & CN 102762636 A & TW 201134854 A & KR 10-2012-0097387 A | 1-31 |
| Y | JP 2008-510848 A (Invista Technologies S.A.R.L.), 10 April 2008 (10.04.2008), claims 1, 6; examples & US 2009/0030115 A1 & EP 1778791 A1 & WO 2006/023583 A2 & DE 602005009210 D & CA 2574571 A & KR 10-2007-0046869 A & CN 101072830 A | 1-31 |
| P,X | JP 2013-39964 A (Mitsubishi Gas Chemical Co., Inc.), 28 February 2013 (28.02.2013), claims 1, 4; paragraphs [0051], [0061], [0081] (Family: none) | 1-24,27-31 |
| A | WO 2011/132456 A1 (Mitsubishi Gas Chemical Co., Inc.), 27 October 2011 (27.10.2011), entire text & US 2013/0041128 A1 & EP 2562203 A1 & CA 2795999 A & CN 102858848 A & MX 2012012144 A & TW 201211106 A | 1-31 |
| A | JP 2008-266434 A (Mitsubishi Engineering-Plastics Corp.), 06 November 2008 (06.11.2008), entire text (Family: none) | 1-31 |
| A | JP 2001-252560 A (Toyobo Co., Ltd.), 18 September 2001 (18.09.2001), entire text (Family: none) | 1-31 |
| A | WO 2011/148682 A1 (Mitsubishi Gas Chemical Co., Inc.), 01 December 2011 (01.12.2011), entire text & US 2013/0066040 A1 & EP 2578617 A1 & CA 2798958 A & CN 102918081 A & MX 2012013188 A & TW 201202300 A | 1-31 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003341747 A
- JP 2991437 B
- JP 2072851 A
- JP 4090848 A
- JP 5115776 A
- WO 2011081099 A
- WO 2012090797 A
- US 3721682 A